# EUROPEAN PATENT SPECIFICATION

(11) **EP 2 808 792 B1**
(45) Date of publication and mention of the grant of the patent: **10.08.2016**
(21) Application number: 13169461.4
(22) Date of filing: 28.05.2013
(51) Int. Cl.: G06F 9/50

(54) **Method and system for using arbitrary computing devices for distributed data processing**
Verfahren und System zur Verwendung mit willkürlichen Rechnervorrichtungen für verteilte Datenverarbeitung
Procédé et système pour utiliser des dispositifs de calcul arbitraire pour traiter des données réparties

(43) Date of publication of application: 03.12.2014
(73) Proprietor: CLIPCHAMP IP PTY LTD, Enoggera QLD 4051 (AU)
(72) Inventor: Balko, Soeren, Indooroopilly, Queensland QLD 4068 (AU)
(74) Representative: Bittner, Peter

(56) References cited:
- US-A1- 2004 015 977
- US-A1- 2010 332 262
- US-B1- 7 533 168

## Description

### Technical Field

The present invention generally relates to data processing and more in particular to using arbitrary computing devices for distributed data processing.

### Background

In large-scale data processing, such as predominant in scientific simulations (e.g., for climate models, weather predictions, traffic simulations, protein folding), big data analytics (e.g., for business intelligence), multimedia data processing (e.g., video transcoding, image ray-tracing, feature detection, optical character recognition), excessive computing resources (e.g., hardware, data centers, power consumption, network traffic, cooling) and manual operations (e.g., for monitoring and administrating the computing resources) are required. These computing resources are often realized by distributed and/or cooperating computing and data storage devices or other types of information technology hardware, which can be used for processing heterogeneous compute-intense computing tasks.

Grid Computing, for example, is a computing infrastructure deploying and/or managing distributed computing devices. In Grid Computing, (distributed) computing resources are dedicatedly assembled previous to creating a virtual compute infrastructure. Further, Grid computing typically requires installing and maintaining (e.g., updating) Grid software stacks (e.g., for running, administering, or monitoring computing tasks) on the computing resources.

Another example exists in community-based approaches, such as BOINC (Berkeley Open Infrastructure for Network Computing) where volunteers may donate idle compute resources from their computing devices to solve certain scientific tasks. Like in Grid computing, these approaches require participants to install client software stacks on the participating computing devices.

As another example, Peer-to-peer (P2P) systems may in some cases be used to perform computing tasks or to provide distributed data storage capabilities. P2P systems may include a plurality of devices connected over a network, which cooperate to perform a task. To coordinate task processing, P2P systems may avoid a dedicated centralized component to manage the distributed devices or may replicate centralized capabilities among a plurality of devices, for example, for discovering available devices or to locate other resources in the plurality of devices.

Another example exists in Infrastructure-as-a-Service (IaaS) Cloud Computing where centrally hosted hardware resources such as a cluster of computing and storage devices connected through a network are made accessible to third parties over a network such as the Internet. One or more virtual machine software instances may abstract from these physical hardware resources where each virtual machine emulates a separate resource and may be made accessible to different users over the network.

Centralized cooperating hardware infrastructures such as Cluster computing, different types of Cloud Computing infrastructures may generally be associated with one or more data centers which pool the hardware resources. These hardware resources may offer the computing capabilities, which may be provisioned over the network as services. In effect, these types of centralized hardware infrastructure may incur capital investments to construct the data centers and to renew the equipment. It may further be associated with running costs, such as for example, personnel cost to operate the data centers and electricity for running and cooling the equipment.

Non-centralized cooperating hardware infrastructures, such as Grid Computing, community approaches like BOINC, or P2P systems may generally be associated with physically distributed hardware resources connected via a computer network. These hardware resources may not be co-located in a single data center and may avoid central components altogether or share central functionality. Existing non-centralized hardware infrastructures may require installing software stacks on participating devices, such as P2P client software, BOINC client software (like.g., SETI@HOME, FOLDING@HOME), or Grid Computing stacks (e.g., the GLOBUS ALLIANCE's GLOBUS toolkit or EUROPEAN GRID INFRASTRUCTURE's GLITE Grid computing middleware). These software installations may require regular updates (e.g., re-installations to benefit from bug fixes or to incorporate newly introduced functionality).

Non-centralized cooperating hardware infrastructures may further require to incorporate hardware devices owned by different parties and may require the consent and deliberate actions of these parties to perform local client software installations. In effect, scalability of these non-centralized cooperating hardware infrastructures may be limited by number of deliberately participating devices. It may, hence, not be possible to scale the total computational capacity (e.g., measured in FLOPs) to the current demand. The overall computational capacity of non-centralized cooperating hardware infrastructures may further generally be limited by the total number of participating devices.

US 2004 / 015977 A1 relates to a peer-to-peer distributed computing environment and discloses a system with issuers, a resource broker, and a plurality of client resource providers. The issuers send workloads to the resource broker, and the resource broker acts as a layer between the issues and the client providers. The task are processed by the client providers using a runtime environment obtained from the resource broker.

Any of the computing infrastructures may have a limited scalability, constrained flexibility to run arbitrary computing jobs or may be out of reach due to significant costs for operating or renting them. Moreover, their deployment and management typically requires a priori known or registered devices and manual installation of dedicated software stacks, which can only be used for a specific computing task. Further, for some applications (e.g., different aspects in precise weather simulations) the performance requirements to the computing infrastructure are so enormous that existing computing infrastructures can even not cope with its requirements.

### Summary

Therefore, there is a need to improve existing distributed and cooperating computing infrastructures with regards to the above limitations, such as a limited performance to answer the needs for very large computing capacity, current requirements to install and maintain dedicated client software on the devices that jointly form the computing infrastructure, and/or a lack of scalability which dynamically right-sizes the computing infrastructure to match the needs of diverse computing jobs having different hardware resourcing requirement.

To solve those technical problems, in one embodiment of the present invention, a worker client has a runtime environment which has been obtained previously from a broker system having a broker address also referred to as broker reference. The broker address has been obtained by the worker client from a further computing device. The worker client includes an interface component communicating with the broker system adapted to receive at least one computing task specification. The runtime environment may be configured to process task input data according to the at least one computing task specification with a task program resulting in task output data, and the interface component may be further adapted to send the task output data to a previously determined recipient device. The previously determined recipient device may be the broker system of a consumer client or any other computing device which is identified as the recipient of said task output data. The task specification may include at least one task execution parameter. The task specification may, for example, specify the parameters of how to transcode a portion of a video (i.e., task input data is transcoded into task output data). The task input data may be a part of a job (e.g., transcoding a video).

In an alternative embodiment, the computing task specification may further include a task program indicator. In case the runtime environment is lacking the task program indicated in the computing task specification, the interface component is further adapted to receive corresponding task program code executable in the runtime environment. In other words, a specific program can be (re)loaded if the runtime environment is lacking it.

In an alternative embodiment, the computing task specification may further include a data chunk. The data chunk can indicate task input data and can be a subset of an input data collection. In case the runtime environment is lacking the task input data indicated in the task specification, the interface component is further adapted to receive the task input data. For example, a portion of a video may be present in the runtime environment from a previous transcoding task. This video data can then be used to perform the task according to the newly received task specification, if the data is not available, it may be (re) loaded.

In another embodiment, the interface component of the worker client may be further adapted to receive a client context request and the runtime environment of the worker client may further include a client context component configured to evaluate the worker client based on the client context request. This evaluated client context request may be sent via the interface component to another computing device. Evaluation of the worker client may be required, for example, to determine the location of the worker (e.g., only task processing in a certain country due to privacy concerns).

In another embodiment, the interface component of the worker client may be further adapted to receive benchmarking code. The benchmarking code may be used to evaluate the worker client executing it in a benchmark component further included in the worker client. The evaluated benchmark data may be sent via the interface component to another computing device. Benchmarking the worker client may be required, for example, to determining the hardware constrains of the worker client (e.g., task processing would require an inacceptable period of time or other worker clients may be better suited for the specific task processing).

In another embodiment, a broker system may include a consumer interface component adapted to receive a job execution specification and an evaluation component configured to evaluate worker clients based on the job execution specification. Further, it may include a compute job component configured to create at least one computing task having a computing task specification according to the evaluation of the worker clients and a deployment component configured to deploy the at least one computing task to a respective evaluated worker client. The computing task specification may include a task execution parameter based on the job execution specification.

In another embodiment, the broker system may further include a worker client interface component adapted to receive at least one task output data resulting from the at least one computing task processed by the respective evaluated worker client to be stored on the broker system. The broker system may further include a composer component configured to compose the at least one task output data to job output data and, in case the job output data corresponds to the job execution specification, the consumer interface component may be further configured to send the job output data to another computing device.

In another embodiment, the broker system may further include a monitor component adapted to receive a computing task indicator associated with the at least one computing task. In case the computing task indicator indicates a task interruption, the deployment component may be further configured to deploy the at least one computing task to the respective evaluated worker client or a further respective evaluated worker client. In case the computing task indicator indicates a task completion of all of the at least one computing tasks, the composer component may be triggered to compose the job output data.

In an embodiment, a system for data processing is provided including at least one worker client configured as described afore and a broker system also configured as described afore, wherein the at least one worker client and the broker system is temporarily communicatively coupled by a data connection to interchange data.

In other words, a system is provided for representing a cooperating computing infrastructure that avoids centralized, cooperating hardware infrastructure and does not retain computing capacity in the form of spare managed hardware to cope with workload peaks. Non-centralized cooperating hardware infrastructure is improved to avoid the need for an a-priori knowledge of the participating devices and to allow using newly joining, unmanaged devices without requiring to install client software stacks on these devices. In the context of the invention, an unmanaged device refers to computing hardware (e.g., Personal Computers [PCs], Laptop computers, tablet computers, smartphones, or any other type of computing hardware) where no client software other than standard software (e.g., an operating system and a World Wide Web browser) is required to be installed, where administrative actions (e.g., upgrading and configuring client software) and policies (e.g., user authorization rules) may be performed by the device user himself. More in particular, unmanaged devices may not be subject to any technical constraints enforced by a central administration infrastructure (e.g., remotely starting particular software on the device). The computer system further may provide for elastic scalability, which can grow to large overall computing capacities and where the provided computing capacity is sized to match to the demands of the current workload. In particular, elastic scalability may identify a characteristic of a distributed computer system where the number of computing resources (e.g., server instances) may rapidly grow or shrink in order to dynamically adjust the total computing capacity (e.g., the number of floating point operations per second provided by the entire distributed computer system) to the current computing demand (e.g., given by the number of concurrent computing tasks). In other words, only as many computing devices are allocated to and become part of the computer system as there is a current need in the form of tasks to be processed.

Embodiments of the invention provide computer system and method for sourcing computing capacity from arbitrary computing devices, including personal computers, workstations, laptops, tablet computers, smartphones, embedded devices and others. The computer system does not require any special-purpose client software stacks to be installed on these devices beyond their standard software (e.g., hardware firmware, operating system, Web browser, and other similar generic software components).

In one embodiment, the arbitrary computing device may be assembled in a single virtual computing resource, suitable to run compute-intense tasks, for example, calculations and big data analytics. The computer system may compensate for the fact that the unmanaged computing devices provide an a-priori unknown time slice of uninterrupted availability to the overall computing capacity. The system may optionally use one or more intermediary systems to connect the computing devices to a central management component.

### Brief Description of the Drawings

FIG. 1 shows an overview of a computer system for data processing according to one embodiment of the invention.
FIG. 2 shows an exemplary Unified Modeling Language (UML) class diagram of data entities defining an exemplary structure of jobs processed by a computer system.
FIG. 3 shows an exemplary flow chart indicating a sequence of steps performed by a computer system to process a job.
FIG. 4 shows an exemplary flow chart indicating a sequence of steps performed by a consumer client and a broker system as part of a computer system when receiving a job.
FIG. 5 shows an exemplary flow chart indicating a sequence of steps performed by a broker system and an intermediary system as part of the computer system when dynamically allocating one or more worker clients.
FIG. 6 shows an exemplary flow chart indicating a sequence of steps performed by a broker system, a worker client, and an intermediary system when initiating a connection from the worker client through the intermediary system and with the broker system.
FIG. 7 shows an exemplary flow chart indicating a sequence of steps performed by a broker system when selecting one or more intermediary systems before allocating further worker clients.
FIG. 8 shows an exemplary flow chart indicating a sequence of steps performed by an intermediary system when pre-selecting a worker client before connecting it to a broker system.
FIG. 9 shows an exemplary flow chart indicating a sequence of steps performed by a broker system and a worker client when estimating the performance of the worker client and the time duration of the transient current participation of the worker client within a computer system.
FIG. 10 shows an exemplary flow chart indicating a sequence of steps performed by a broker system when selecting one or more suitable worker clients to run one or more tasks from a job.
FIG. 11 shows an exemplary flow chart indicating a sequence of steps performed by a broker system and a worker client when deploying a backend application and an input data collection of a job from the broker system to the worker client.
FIG. 12 shows an exemplary flow chart indicating a sequence of steps performed by a broker system and a worker client when running a task on the worker client.
FIG. 13 shows an exemplary flow chart indicating a sequence of steps performed by a worker client when caching a backend application, an input data collection, and an output data collection of a job in the main memory or persistent storage of the worker client.

### Detailed Description

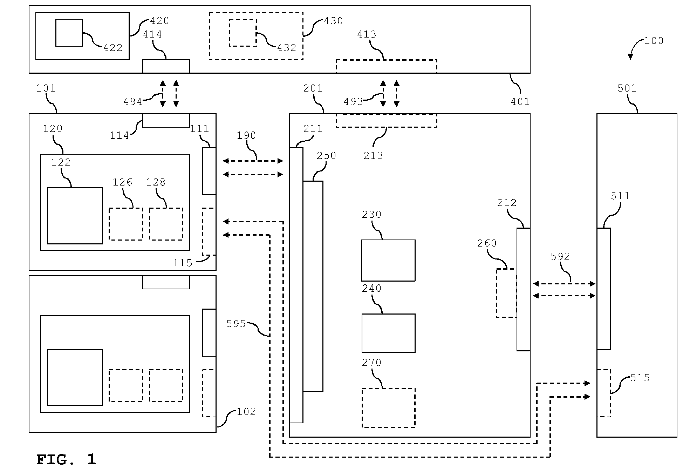

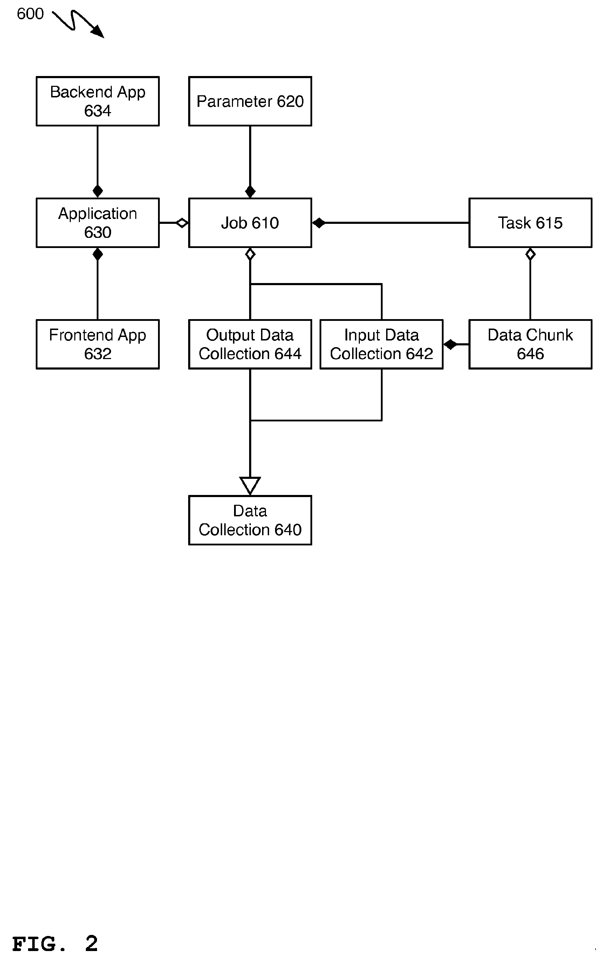

FIG. 1 shows an overview of a computer system 100 (which will be referred to as system 100 hereinafter) including worker clients 101, 102, a broker system 201, an intermediary system 401, and a consumer client 501. Before turning to the detailed description of FIG. 1, FIG. 2 is discussed to explain a programming model used by embodiments of the present invention.

FIG. 2 is a UML class diagram 600 showing exemplary core entities of the programming model. A job 610 is the unit of work that may be individually submitted to system 100 (cf. FIG. 1). Generally, jobs (e.g., job 610) may specify a workload for system 100 (cf. FIG. 1) comprising an application 630, such as executable computer program code, to be instantiated and invoked with parameters 620 and to process an input data collection 642 for producing an output data collection 644. Jobs can be split into one or more tasks 615 where each task processes a data chunk 646 being a subset of the input data collection 642.

A job 610 may be defined by none, one, or a plurality of parameters 620, a reference to an application 630 which may include a frontend application 632 and a backend application 634, and a reference to an input data collection 642 and an output data collection 644.

Parameters 620 may be used as arguments to instantiate a backend application 634 in the scope of the job 610. For example, a backend application 634 that can be a video transcoding program (i.e., a computer program transforming a video stream into another video format, resolution, encoding, etc.) which may be parameterized with the resolution, the frame rate, the video and audio codecs, or any other parameter influencing the operations of the backend application 634. Parameters 620 may also be used to influence the behavior of system 100 (cf. FIG. 1) with regards to executing the job 610. For instance, a job 610 may specify:
(1) a time point when the output data collection 644 shall be reported (e.g., progressively whenever partial output data becomes available, or completely once all tasks 615 of job 610 have been completed).
(2) a programming model (e.g., map-reduce, map-combine-reduce, workflow) defining the type of tasks 615 (e.g., reduce, combine) supported by the backend application 634 and the order in which these shall be run,
(3) performance and cost thresholds for execution of the job 610 like the maximum permissible job execution duration, the maximum cost for running the job, the minimum throughput (in number of bytes per unit of time) of data from the input data collection 642,
(4) caching hints indicating whether the input data collection 642 or the output data collection 644 shall be kept on the worker clients 101, 102 (cf. FIG. 1) after a job was completed,
(5) zoning policies specifying the location of worker client 101, 102 (cf. FIG. 1) running the tasks 615 of a job 610 and
(6) other parameters which may affect the execution of a job 610 on the broker system 201 (cf. FIG. 1) or the execution of the associated tasks 615 on worker clients 101, 102 (cf. FIG. 1).

A job 610 may also reference a frontend application 632, which can provide the user interface and client-side functionality that is run at a client device where the job is submitted (e.g., a consumer client 501, cf. FIG. 1). The frontend application 632 may be suitable to run on the client device from where the job is submitted. A job 610 may further reference a backend application 634, which can include highly parallelizable, non-user-facing application code for processing the input data collection 642 and populating the output data collection 644. The backend application may be run at a plurality of client devices, which may jointly form the distributed computing infrastructure managed by system 100 (cf. FIG. 1) (e.g., the worker clients 101, 102, cf. FIG. 1). For example, a frontend application 632 and a backend application 634 may be a computer program written in JAVASCRIPT, ECMASCRIPT, GOOGLE DART, SUN JAVA, ADOBE FLASH ACTIONSCRIPT, MICROSOFT .NET, or any other programming languages supported by the consumer client 501 (cf. FIG. 1) and worker clients 101, 102 (cf. FIG. 1), respectively. Frontend application 632 or backend application 634 files may further be packaged into a format suitable to be deployed to consumer client 501 (cf. FIG. 1) and worker clients 101, 102 (cf. FIG. 1), respectively. Example application packaging formats include ZIP archives, JAR archives, GZIP archives or any other format suitable to be deployed to the target runtime environments of the consumer client 501 (cf. FIG. 1) and worker clients 101, 102 (cf. FIG. 1), respectively.

A job 610 can also reference an output data collection 644 which may be empty before the job is started. The job 610 can populate the output data collection 610 by producing output data when running the backend application 634 on the input data collection 642. An output data collection 644 may also exist before the job is started. In this case, a parameter 620 of the job 610 may specify the behavior of system 100 (cf. FIG. 1) with regards to the existing output data collection 644. For instance, the job 610 may overwrite and replace the content of output data collection 644. In another example, the job 610 may append data to the existing output data collection 644 or may merge new data into the existing output data collection 644 by comparing newly inserted data items with existing data items.

A job 610 can further reference an input data collection 642 which may be populated with data items before the job 610 is executed. As part of executing job 610, system 100 (cf. FIG. 1) splits input data collection 642 into data chunks 646. Each task 615 of job 610 may process a data chunk 646. Parameters 620 of job 610 may specify the procedure with which the input data collection 642 can be split into separate data chunks 646. For instance, a parameter 620 may specify a formula calculating the byte offset into input data collection 642 for a given data item number such that a data chunk 646 can be split by means of simple file seek operations to the input data collection 642. In another example, the input data collection 642 was given as a text file where line endings demarcate the different data items. A parameter 620 may, thus, specify a split procedure that searches for line ending characters in the input data collection 642.

Generally, a data collection 640 (e.g., input data collection 642, output data collection 644) and an application 630 may be referenced by a job 610 by means of technical identifiers which facilitate locating and, subsequently, retrieving the content of a data collection or application over the communication coupling mechanism in use. For instance, in a communication coupling that is the Internet, UNIFORM RESOURCE LOCATORS (URL) may be used to reference application 630 and data collection 640. In a communication coupling that is a distributed file system, such as the MICROSOFT SERVER MESSAGE BLOCK (SMB) or the NETWORK FILE SYSTEM (NFS), suitable file naming schemes may be used to reference application 630 and data collection 640.

Turning back to FIG. 1 showing the overview of system 100, a worker client 101, 102 may be a device suitable to process one or more computing tasks 615 (cf. FIG. 2) operating on data chunks 646 (cf. FIG. 2) as part of input data collections 642 (cf. FIG. 2). An example of a worker client may be a personal computer, a laptop computer, a tablet computer, a smartphone, an in-car entertainment system, a smart home appliance, network equipment such as Wireless Local Network (WLAN) routers, a TV set, gaming consoles or any other type of system that is equipped with software suitable to retrieve and execute application code and data from another system through a network such as the Internet. Example software on a worker client 101, 102 is a World Wide Web browser (e.g., GOOGLE CHROME, MOZILLA FIREFOX, MICROSOFT INTERNET EXPLORER, APPLE SAFARI) capable of running dynamically retrieved application code (in formats such as JAVASCRIPT, ECMASCRIPT, GOOGLE DART, ORACLE JAVA, MICROSOFT SILVERLIGHT, GOOGLE NATIVE CLIENT, MICROSOFT ACTIVEX, ADOBE FLASH, etc.).

The worker client 101, 102 may be temporarily communicatively coupled with the broker system 201. Such coupling can be based on any suitable wired or wireless network communication standard. Thus, the worker client 101, 102 may at least temporarily be part of the system 100. The broker system 201 may, at any given point in time be communicatively coupled with none, one, or a plurality of worker clients, such as worker client 101, 102. In FIG. 1, coupling of worker client 101 with broker system 201, intermediary system 401, and consumer client 501 is analogously possible for worker client 102 and its respective interfaces.

The worker client 101 may be capable to make network connections to send data to another device or receive data from another device. In the example embodiment of system 100, the worker client 101 may make network connections to the broker system 201, the intermediary system 401, and the consumer client 501 through a broker interface component 111, an intermediary interface component 114, and a consumer client interface component 115, respectively.

The worker client 101 may further contain a worker client runtime environment 120 which may be retrieved from the broker system 201 and which is suitable to process one or more task programs 122 being instances of a task 615 (cf. FIG. 2), a backend application 634 (cf. FIG. 2), none, one or a plurality of parameters 620 (cf. FIG. 2) and a data chunk 646 (cf. FIG. 2).

A worker client 101 may further optionally include a client context component 126, which is a component capable of probing for local device capabilities and worker client information about the worker clients. Components illustrated by dashed lines are optional components. One example of device capabilities and worker client information is the existence and version of HTML5 standard application programming interfaces (APIs), such as WEBGL (KHRONOS GROUP WebGL Specification, Version 1.0.2, 1 March 2013), WEBCL (KHRONOS GROUP WebCL Working Draft, 14 May 2013), WEBRTC (WebRTC 1.0 - W3C Editor's Draft, 22 March 2013), or WEBWORKER (W3C Candidate Recommendation, 1 May 2012), etc. Another example of device capabilities and worker client information is hardware characteristics such as the number of CPU cores and their clock speed or the size and resolution of the screen, etc. Another example of device capabilities and worker client information is the presence of interpreters for JAVASCRIPT, GOOGLE DART, etc., plugins for ADOBE FLASH, MICROSOFT SILVERLIGHT, etc., or application code runtime containers such as MICROSOFT ACTIVEX, GOOGLE NATIVE CLIENT, etc. Another example of device capabilities and worker client information are the geographical locale and time zone, the type and bandwidth of the network connection (such as WLAN networks, mobile networks such as UMTS, LTE, etc., wired networks such as ADSL, FTTH, etc.). The list of examples is illustrative only and shall not be interpreted to be limiting in any way. The person skilled in the art is able to identify further device capabilities.

The worker client 101 may further include a benchmarking component 128, which is a component capable of measuring and reporting the performance (e.g., the processing time, data throughput, memory consumption) of a given benchmark program code which is an application code suitable to run in the runtime environment 120.

In the context of system 100, the intermediary system 401 helps initiating the contact between worker clients 101, 102 and the broker system 201. In this way, the broker system 201 may connect to worker clients 101, 102 despite the fact that these worker clients had originally only performed network requests to an intermediary system 401, such as a Website or a network access point.

The worker client 101 may contact the intermediary system 401 through its intermediary interface component 114 to issue network requests and retrieve data from or through the intermediary system 401. The worker client 101 may further evaluate the corresponding network response received from the intermediary system 401, which may contain a reference (e.g., a URL or another reference suitable to make network requests) to the broker system 201. The worker client 101 may then perform subsequent network requests to the broker system 201.

The intermediary system 401 can be a device suitable to serve network requests from other systems such as the worker client 101, 102. The intermediary system 401 may either serve the network request directly by assembling the response itself or it may indirectly serve the request by forwarding the request to another system. Examples of intermediary systems include network servers (e.g., Web servers, file servers, application server middleware, content delivery networks, load balancer systems, e.g., reverse proxy servers being centralized components which fetch data from multiple other servers on behalf of a client, network systems and equipment (e.g., network access points, network proxies, network firewalls and gateways), and software which is locally installed on the worker client 101, 102 (e.g., network drivers, local firewalls).

The intermediary system 401 may establish a temporary network connection 494 to the worker client 101 through the worker client interface component 414. An optional broker interface component 413 may establish a temporary network connection 493 to the broker system 201.

When the intermediary system 401 receives a network request from the worker client 101 via the worker client interface component 414 and through the temporary network connection 494, a broker reference embedding component 420 may embed a broker reference 422 into the network response that is sent back to the worker client 101. The broker reference may be implemented by a Uniform Resource Locator (URL), a Uniform Resource Identifier (URI), an Internet Protocol (IP) address, a Public switched telephone network (PSTN) number or another technical representation of an address suitable to let a worker client 101 perform network requests to a broker system 201 through a temporary network connection 190.

The intermediary system 401 may optionally include a client selection component 430. The client selection component 430 selects a subset of worker clients 101, 102 among the entire plurality of worker clients issuing network requests to the intermediary system 401. The broker reference embedding component may embed the broker reference 422 only into the network responses to the worker clients 101, 102 that were selected by the client selection component 430.

The selection may be based on a client selection configuration 432 which is configured at the intermediary system 401 through a network request received on the broker interface component through a temporary network connection 493 from the broker system 201. For example, the selection may be a filtering procedure which compares fields from the client selection configuration 432 to characteristics of the worker clients 101, 102 such as the characteristics probed by the worker client 101 client context component 126. Another example of a client selection may be based on a comparison of the worker clients' user data such as a manual opt-in or opt-out selection where the user of a worker client 101, 102 has deliberately decided to allow or disallow the embedding of the broker reference 422. In another example, the intermediary system 401 may store context data for any worker client 101, 102, such as for example the length of previous visits of a worker client 101, 102 at the intermediary system 401, and may use this historical contextual worker client data to perform the worker client selection. For instance, the client selection component 430 may only include worker clients whose average visit duration exceeded a certain threshold, such as a minimum number of seconds for which a worker client 101, 102 was continuously connected to the broker system 201. Other examples of thresholds relating to historical contextual worker client data and being applied by the client selection component 430 to select worker clients 101, 102 may be (1) the worker clients' upstream or downstream network bandwidth, giving the data volume that can be transferred in a given timely interval to and from the worker client 101 on the communication coupling 494 between the worker client 101 and the intermediary system 401; or (2) any other quantitative measure gathered by the intermediate system 401 suitable to serve as a criterion to assess the fitness of a worker client 101 to successfully perform tasks 615, subsequently. The broker system 201 can be a device capable of making and serving network requests from other systems and devices such as worker clients 101, 102, intermediary systems 401, and consumer clients 501. The broker system may dynamically group a plurality of worker clients into a virtual computing resource where the plurality of worker clients may be different at any two different points in time.

The broker system 201 receives connection requests from worker clients 101, 102 on its worker client interface component 211 and through a temporary communication coupling such as communication coupling 190. Upon receiving a connection or communication request on its worker client interface component 211, the broker system 201 may trigger the evaluation component 230 to assess the worker client's qualitative and quantitative characteristics, such as the worker client 101 capabilities probed by the client context component 126 and the worker client performance evaluated by the benchmarking component 128. For example, the broker system 201 may request a worker client 101 to run a certain benchmark code (such as a standard benchmarking program or a small representative workload) or to probe for certain capabilities (such as the existence of certain APIs or device characteristics at the worker client).

A broker system 201 may further include a compute job component 240 which may drive the execution of a plurality of jobs 610 (cf. FIG. 2) by splitting each job into at least one or more tasks 615 (cf. FIG. 2), assigning tasks 615 (cf. FIG. 2) to idle worker clients 101, 102, and retrying failed tasks. A deployment component 250 may send each task 615 (cf. FIG. 2) through the worker client interface component 211 and on the temporary communication coupling 190 to at least one worker client such as worker client101.

The compute job component 240 may further send a client selection configuration 432 to one or a plurality of intermediary systems 401 using the intermediary interface component 213 on the broker system 201, the broker interface component 413 on the intermediary system 401 and over the temporary communication coupling 493 between the broker system 201 and the intermediary system 401.

A monitoring component 270 may track the progress of each task 615 (cf. FIG. 2) by receiving status updates of running the task on the worker clients 101 such as progress indicators, error reports, intermediate results, and others. The monitoring component 270 may further communicate with the compute job component 240 to signal events such as a "task completion" or "error". Upon these events, the compute job component 240 may perform certain actions such as to schedule another task on the now idle worker client 101 or to retry running an erroneously aborted task on another worker client. The monitoring component 270 may also forward the task status updates to the consumer client 501.

Upon completion of a task, worker clients will pass back portions of the output data collection 644 (cf. FIG. 2) of job 610 (cf. FIG. 2) through the communication coupling 190 to the worker client interface component 211 of the broker system 201. In an alternative embodiment, a worker client 101 may incrementally send incomplete or intermediate parts of the output data collection 644 (cf. FIG. 2) to the broker system 201.

In one embodiment of system 100, the broker system 201 may have a data composer component 260 configured to compose the output data collection 644 (cf. FIG. 2) from individual portions of the output data collection which were sent to the broker system 201 by the plurality of worker clients 101, 102 wherein the worker clients have executed the plurality of tasks 615 (cf. FIG. 2) belonging to the job 610 (cf. FIG. 2).

In an alternative embodiment of system 100, dedicated tasks 615 (cf. FIG. 2) responsible for composing a plurality of portions of the data output collection into a single consolidated data output collection may be scheduled to run on worker clients 101, 102.

In yet another embodiment of system 100, the input data collection 642 (cf. FIG. 2) and output data collection 644 (cf. FIG. 2) may be directly exchanged between a consumer client 501 and the plurality of worker clients using a temporary communication coupling such as worker client 101 with the temporary communication coupling 595.The worker client interface component 515 on the consumer client 501 sends the plurality of data chunks 646 (cf. FIG. 2) (from the input data collection 642 (cf. FIG. 2)) directly to the consumer client interface component 115 of the worker clients 101. Vice versa, the output data collection 644 (cf. FIG. 2) is directly sent from the worker clients 101 to the consumer client 501. In both cases, the consumer client 501 and worker clients 101, 102 may directly exchange the data collections using suitable peer-to-peer communication protocols such as W3C's WEBRTC API, MICROSOFT's CUSTOMIZABLE, UBIQUITOUS REAL-TIME COMMUNICATION OVER THE WEB (CU-RTC-WEB, non-official Draft, 9 August 2012) or any other communication protocol suitable for direct peer-to-peer data exchange between the consumer client 501 and worker clients 101, 102.

The consumer client 501 can be a device that establishes a temporary communication coupling 592 to the broker system 201, using the broker interface component 511 on the consumer client 501 and the consumer interface component 212 on the broker system 201.

The consumer client 501 may deploy backend application code 634 (cf. FIG. 2) and input data collections 642 (cf. FIG. 2) to the broker system 201. The consumer client may further submit jobs 610 (cf. FIG. 2) to the broker system 201.

The consumer client 501 may further run a frontend application 632 (cf. FIG. 2) to provide for the user interface and client-side functionality of an application 630 (cf. FIG. 2).

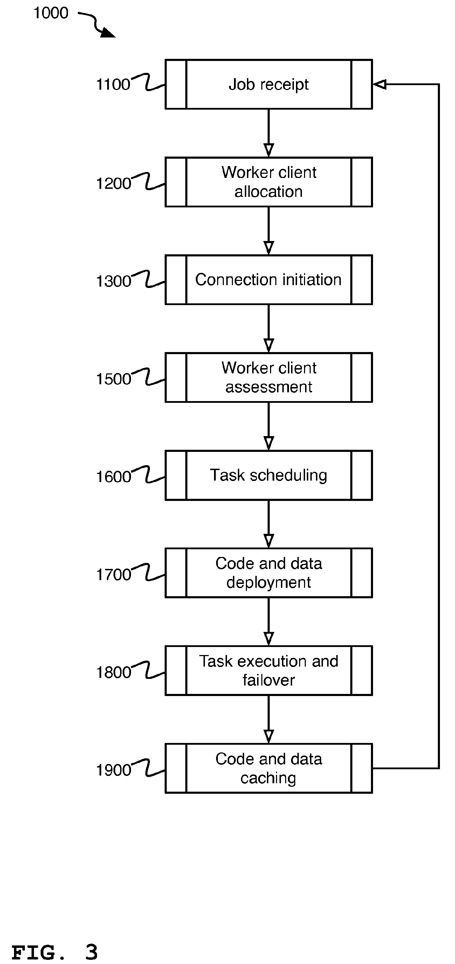

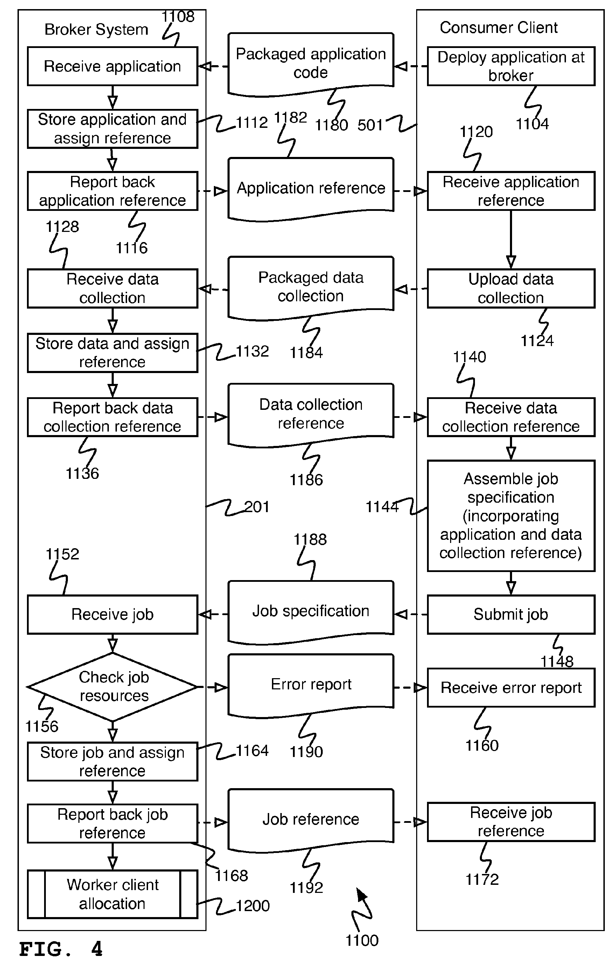

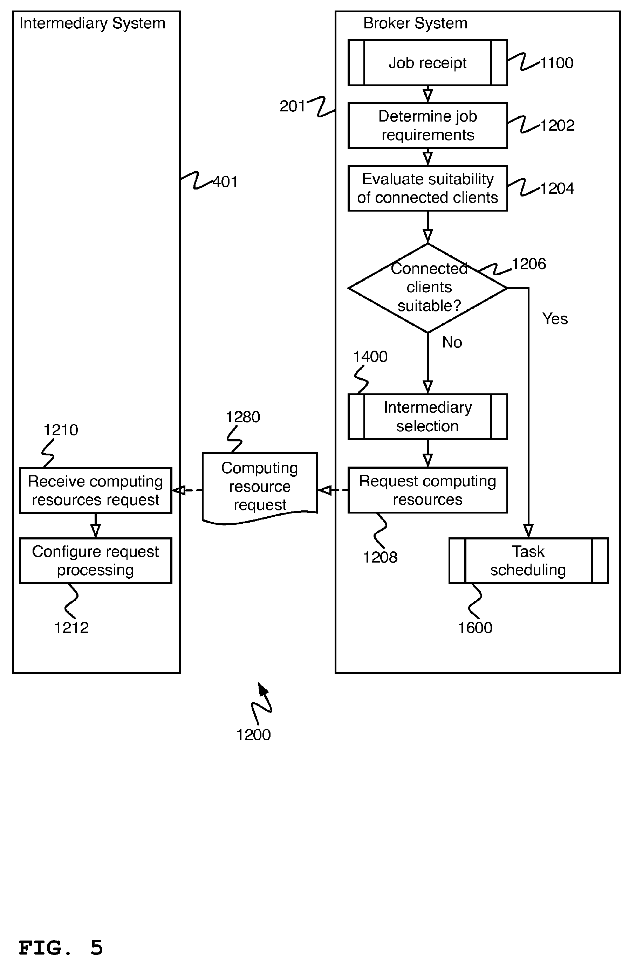

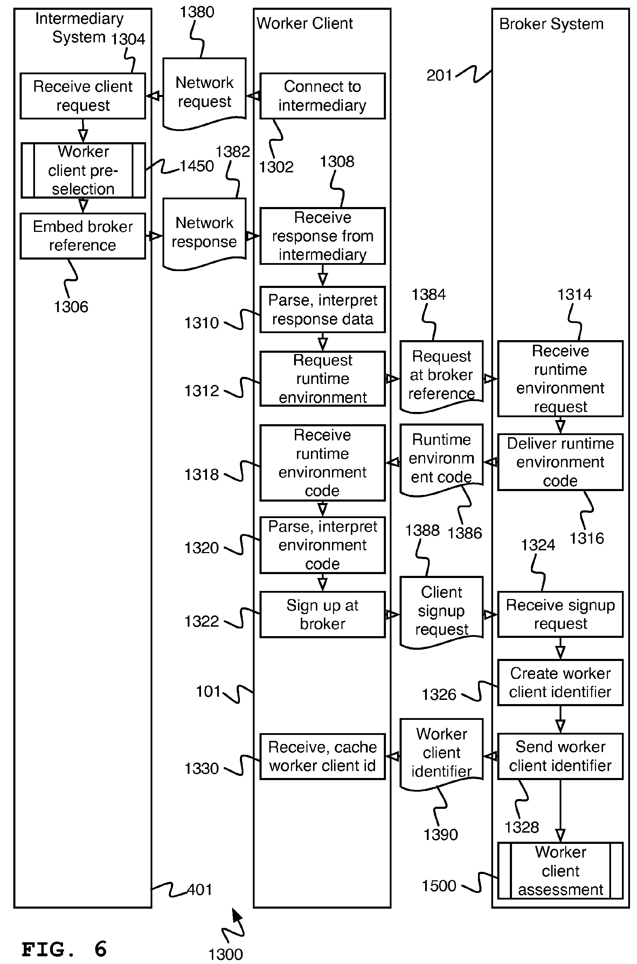

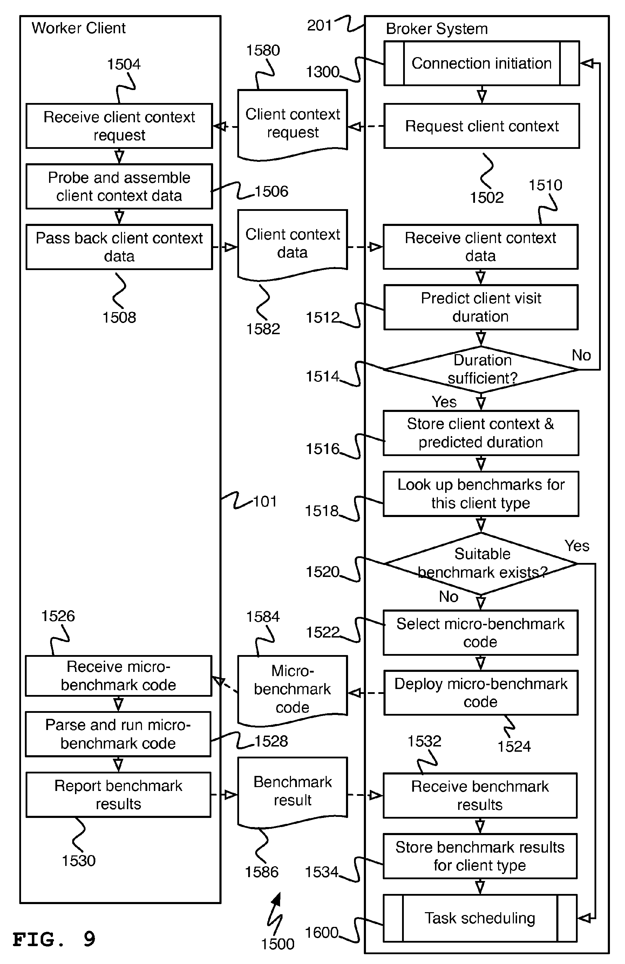

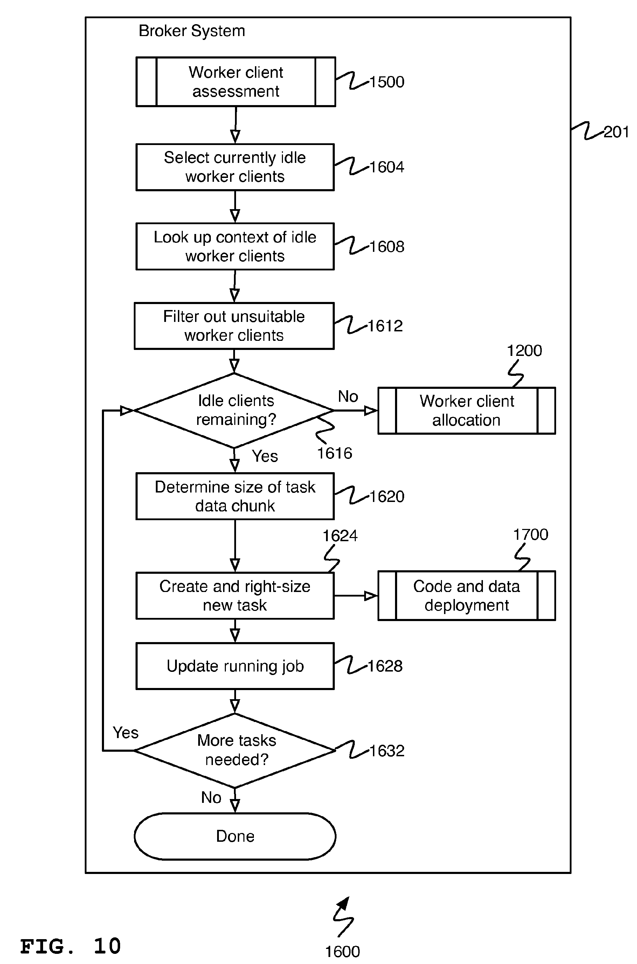

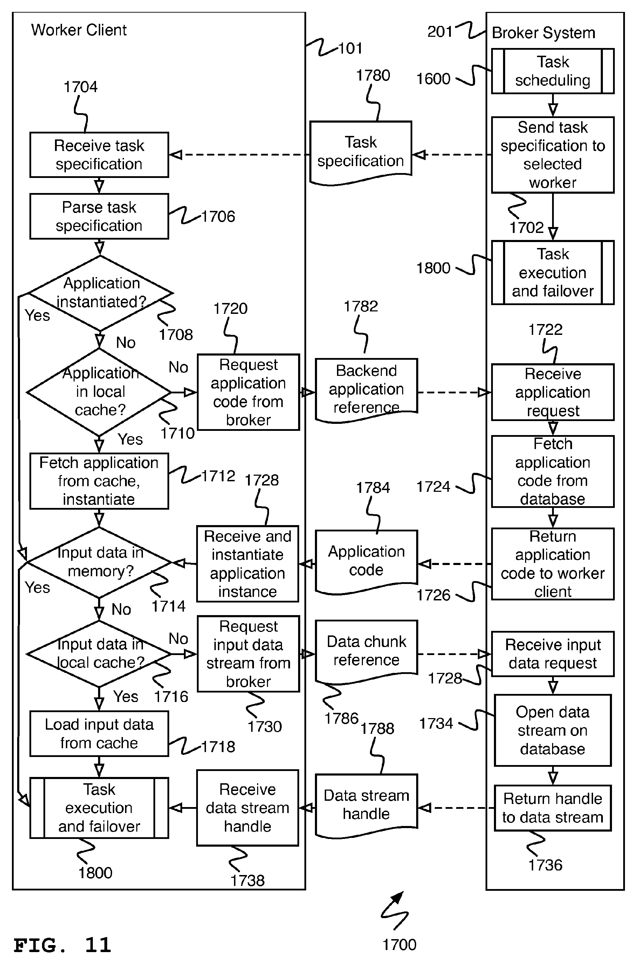

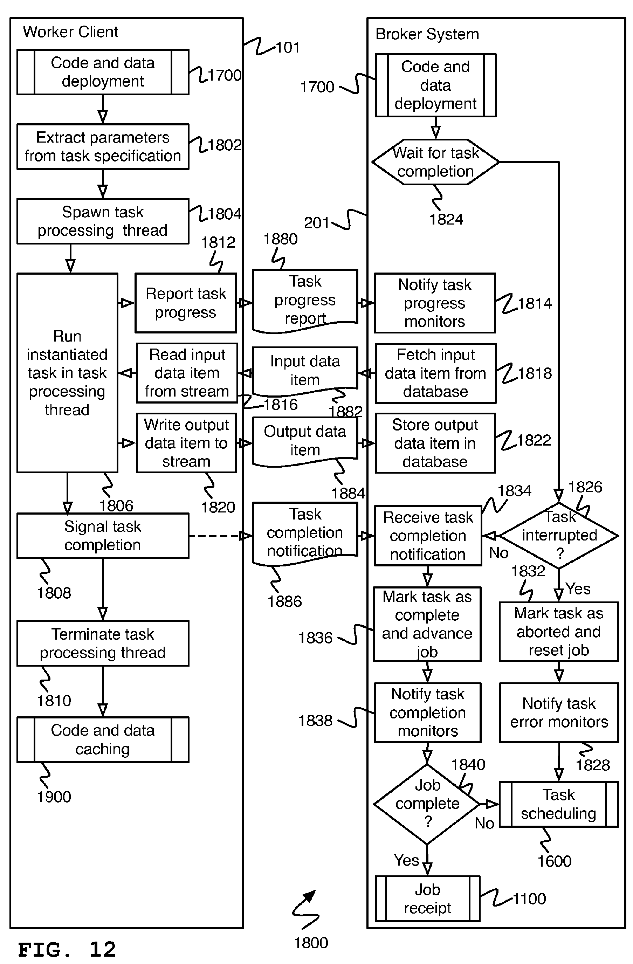

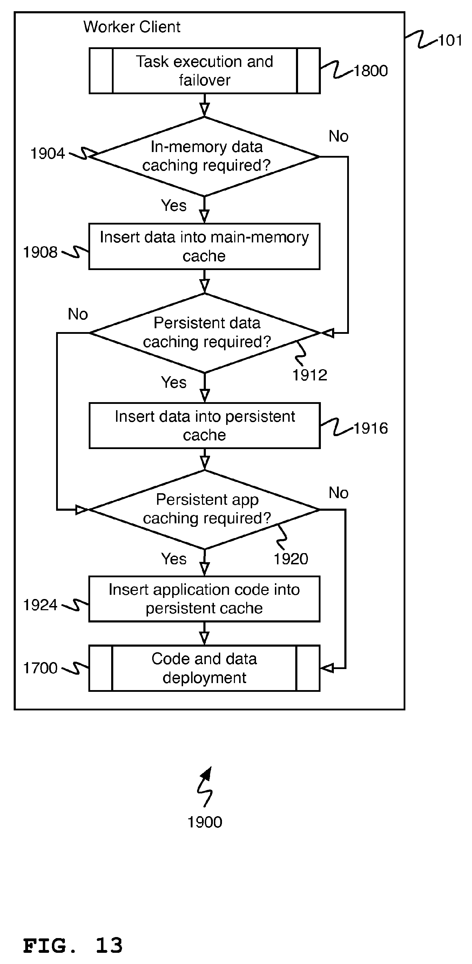

FIG. 3 shows an exemplary flow chart 1000 indicating the general steps in processing a job 610 (cf. FIG. 2) within system 100 (cf. FIG. 1). It includes a number of processes where process job receipt 1100 (cf. also FIG. 4) describes the submission of a job 610 (cf. FIG. 2) by the user of a consumer client 501 (cf. FIG. 1) and the receipt of that job 610 (cf. FIG. 2) by the broker system 201 (cf. FIG. 1). Process worker client allocation 1200 (cf. also FIG. 5) describes the dynamic inclusion of new worker clients 101, 102 (cf. FIG. 1) into the collective virtual computing infrastructure formed by system 100 (cf. FIG. 1). Process connection initiation 1300 (cf. also FIG. 6) describes the process where a selected worker client 101, 102 (cf. FIG. 1) joins system 100 (cf. FIG. 1) by connecting to the broker system 201 (cf. FIG. 1). Process worker client assessment 1500 (cf. also FIG. 9) describes the automatic characterization of a worker client 101, 102 (cf. FIG. 1) regarding its performance and suitability to run tasks 615 (cf. FIG. 2) of a job 610 (cf. FIG. 2). Process task scheduling 1600 (cf. also FIG. 10) describes the process of splitting a job 610 (cf. FIG. 2) into at least one or a more tasks 615 (cf. FIG. 2). Process code and data deployment 1700 (cf. also FIG. 11) describes the process of transporting the backend application 634 (cf. FIG. 2) and data chunk 646 (cf. FIG. 2) corresponding to a task 615 (cf. FIG. 2) to a worker client 101, 102 (cf. FIG. 1). Process task execution and failover 1800 (cf. also FIG. 12) describes the process of running a task 615 (cf. FIG. 2) on a worker client 101, 102 (cf. FIG. 1) and having the broker system 201 (cf. FIG. 1) fail over errors in the task execution, which denotes the capabilities of the broker system 201 (cf. FIG. 1) to deal with errors occurring while executing a task 615 (cf. FIG. 2) on a worker client 101 (cf. FIG. 1) in a way that (1) other jobs and tasks may continue executing without being affected by the erroneous task 615 (cf. FIG. 2) and (2) the erroneous task 615 (cf. FIG. 2) may be retried on another worker client 102 (cf. FIG. 2). Process code and data caching 1900 (cf. also FIG. 13) describes the process of storing the backend application 634 (cf. FIG. 2) or the output data collection 644 (cf. FIG. 2) in main memory or persistent storage of a worker client 101, 102 (cf. FIG. 1). After completing process code and data caching 1900 (cf. also FIG. 13), a new job can be received.

In alternative embodiments, the processing order of processes 1100 to 1900 in flow chart 1000 can be different and/or parallel. For instance, process job receipt 1100 (cf. also FIG. 4) can be executed concurrently to the execution of other jobs where a separate operating system thread can receive jobs 610 (cf. FIG. 2) and store them in a queue at the broker system 201 (cf. FIG. 1) from where they are later picked-up by the process task scheduling 1600 (cf. also FIG. 10). Another example is where the process connection initiation 1300 (cf. also FIG. 6) and subsequent process worker client assessment 1500 (cf. also FIG. 9) are executed in response to a worker client 101, 102 (cf. FIG. 1) connecting to the broker system 201 (cf. FIG. 1) in parallel to the other processes.

The processes 1100 to 1900 are further depicted in FIGs. 4 to 6 and 9 to 13.

FIG. 4 shows an exemplary flow chart indicating a sequence of steps performed by a consumer client 501 (cf. also FIG. 1) and a broker system 201 (cf. also FIG. 1) as part of a computer system 100 (cf. FIG. 1) when receiving a job 610 (cf. FIG. 2). In other words, the flow chart shows the process job receipt 1100 where a consumer client 501 (cf. also FIG. 1) sends an application 630 (cf. FIG. 2) and an input data collection 642 (cf. FIG. 2) to the broker system 201 (cf. also FIG. 1) before a job 610 (cf. FIG. 2) is submitted and the subsequent steps of processing job 610 (cf. FIG. 2) are run.

In step 1104, the consumer client 501 (cf. also FIG. 1) deploys an application 630 (cf. FIG. 2) at the broker system 201 (cf. also FIG. 1). The executable program code of application 630 (cf. FIG. 2) is represented in a packaged application code 1180 format such as for example a ZIP file, a JAR file, a GZIP file or any other format suitable to efficiently store the entirety of the application code and send it over an communication coupling 592 (cf. FIG. 1), such as a computer network connection.

In step 1108, the packaged application code 1180 is received by the broker system 201 (cf. also FIG. 1) where step 1108 may, for example, be implemented by a Representational State Transfer (REST) Web Service or any other communication coupling endpoint which is suitable to receive the packaged application code 1180.

In step 1112, the broker system 201 (cf. also FIG. 1) stores the packaged application code 1180 in a persistent storage facility such as a database, file system or other suitable data storage mechanism. The broker system 201 (cf. also FIG. 1) may also assign a reference to the stored packaged application 1180 code such as a URL, a file name, a primary database key or another type of address scheme suitable to locate the packaged application code 1180 by means of the reference.

In step 1116, the broker system 201 (cf. also FIG. 1) sends back the application reference 1182 of the stored packaged application 1180 to the consumer client 501 (cf. also FIG. 1). Sending back the application reference 1182 may, for example, happen in the response message of a REST Web Service received in step 1108.

In step 1120, the consumer client 501 (cf. also FIG. 1) receives the application reference 1182 and may forward it to other systems or components communicatively coupled to the consumer client 501 (cf. also FIG. 1) such as an Enterprise Service Bus (ESB), an Enterprise Resource Planning (ERP) system or any other system or component that may use the application reference 1182 to access the packaged application code 1180 at the broker system 201 (cf. also FIG. 1).

In step 1124, the consumer client 501 (cf. also FIG. 1) uploads the input data collection 642 (cf. FIG. 2) to the broker system 201 (cf. also FIG. 1). The input data collection 642 (cf. FIG. 2) is represented in a packaged data collection 1184 format, which may be any format suitable to send the input data collection 642 (cf. FIG. 2) over a communication coupling such as a computer network.

In an alternative embodiment of the flow chart of process job receipt 1100 (cf. FIG. 4), the input data collection 642 (cf. FIG. 2)/packaged data collection 1184 may be successively streamed from the consumer client 501 (cf. also FIG. 1) to the broker system 201 (cf. also FIG. 1), wherein the input data collection 642 (cf. FIG. 2) is send in small data packets over the communication coupling 592 (cf. FIG. 1) using appropriate asynchronous streaming protocols such as WebSockets (W3C Candidate Recommendation, 20 September 2012), Real-time Streaming Protocol (RTSP, Internet Engineering Task Force (IETF) Network Working Group, Request for Comments (RFC) 2326, April 1998), and others.

In step 1128, the packaged data collection 1184 is received by the broker system 201 (cf. also FIG. 1). In step 1132, the packaged data collection 1184 is subsequently stored in a suitable persistent storage system, such as a database. Further, a data collection reference 1186, such as a URL, is assigned. In step 1136, the data collection reference 1186 is sent back to the consumer client 501 (cf. also FIG. 1) where it is received in step 1140.

In step 1144, the consumer client 501 (cf. also FIG. 1) may create a job specification 1188 representing a job 610 (cf. FIG. 2). The job specification 1188 may be a technical representation such as an XML document, a JSON document, or any other technical representation suitable to capture the job specification. The job specification 1188 references the application 630 (cf. FIG. 2) and input data collection 642 (cf. FIG. 2) by including their technical references (application reference 1182 and data collection reference 1186, respectively). The job specification 1188 may also include none, one, or a plurality of parameters 620 (cf. FIG. 2), for example, arguments to instantiate the backend application 634 (cf. FIG. 2) and influence its behavior. Alternatively, parameters 620 (cf. FIG. 2) may include technical configuration information influencing the process itself, which drives the execution of the job 610 (cf. FIG. 2) on system 100 (cf. FIG. 1).

In step 1148, the consumer client 501 (cf. also FIG. 1) submits the job specification 1188 representing a job 610 (cf. FIG. 2) to the broker system 201 (cf. also FIG. 1) using a technical protocol suitable for the communication coupling 592 (cf. FIG. 1). In step 1152, the job specification 1188 is received by the broker system 201 (cf. also FIG. 1).

In step 1156, the broker system 201 (cf. also FIG. 1) checks and evaluates whether the job specification1188 does reference an application 630 (cf. FIG. 2) and an input data collection 642 (cf. FIG. 2) which were sent to the broker system 201 (cf. also FIG. 1) in form of the packaged application code 1180 and the packaged data collection 1184. Step 1156 may perform further static soundness checks on the submitted job specification 1188. For example, checks may include a test whether the parameters 620 (cf. FIG. 2) as part of the job specification 1188 are complete and provide for all the actual arguments to the backend application 634 (cf. FIG. 2). Another example is a syntax check of the frontend application 632 (cf. FIG. 2) and backend application 634 (cf. FIG. 2), which are contained in the packaged application code 1180.

If the compliance check step 1156 results in non-compliance, the broker system 201 (cf. also FIG. 1) may send an error report 1190 to the consumer client 501 (cf. also FIG. 1), which is received in step 1160. The consumer client 501 (cf. also FIG. 1) may perform a number of compensation actions, for example signal the error visually to a user, prompt for a corrected job specification 1188 and re-submit it to the broker system 201 (cf. also FIG. 1), forward the error report to connected systems and components, roll back a local transaction which manages the interaction with the broker system 201 (cf. also FIG. 1), or any other action suitable to prevent a malicious state on the consumer client 501 (cf. also FIG. 1) or to correct the job specification 1188 and to re-submit it to the broker system 201 (cf. also FIG. 1) in step 1148.

If the compliance check performed in step 1156 results in compliance, the broker system 201 (cf. FIG. 1) stores in step 1164 the job specification 1188 in a suitable data storage medium. Step 1164 also assigns a job reference 1192 to the job specification 1188. A job reference 1192 may, for example, be a URL, a file name, a database key or any other identifier suitable to address and locate the job specification 1188 on the broker system 201 (cf. also FIG. 1). In step 1168, the broker system 201 (cf. also FIG. 1) sends the job reference 1192 to the consumer client 501 (cf. also FIG. 1) where it is received in step 1172. The consumer client 501 (cf. also FIG. 1) may locally store the job reference 1192 for purposes such as for example to subsequently query the broker system 201 (cf. also FIG. 1) for the current job status. After the broker system 201 (cf. also FIG. 1) has completed step 1168, it starts the process worker client allocation 1200 (cf. also FIG. 5).

In an alternative embodiment of the flow chart of process job receipt 1100, the steps before a job specification 1188 of a job 610 (cf. FIG. 2) may be different. For instance, the packaged application code 1180 may only be sent to the broker system 201 (cf. also FIG. 1) after the packaged data collection 1184 was sent. Another example is to reuse packaged application code 1180 or packaged data collection 1184 which were already used by a previously submitted job and may not be sent to the broker system again. Other embodiments, where the packaged application code 1180, the packaged data collection 1184, or the job specification 1188 are sent from different consumer clients to the broker system 201 (cf. also FIG. 1), may also exist.

In an alternative embodiment, the consumer client 501 (cf. also FIG. 1) may not send the packaged application code 1180 or the packaged data collection 1184 to the broker system 201 (cf. also FIG. 1) using the communication coupling 592 (cf. FIG. 1), but may instead use a communication coupling 595 (cf. FIG. 1) to send the packaged application code 1180 or the packaged data collection 1184 directly to one or more worker clients 101 (cf. FIG. 1), using suitable peer-to-peer communication protocols such as for example W3C's WEBRTC, MICROSOFT CU-RTC-WEB or any other protocol suitable to allow for a direct data exchange between the consumer client 501 (cf. also FIG. 1) and the worker client 101 (cf. FIG. 1) on top of a communication coupling 595 (cf. FIG. 1). In this embodiment, the broker system 201 (cf. also FIG. 1) may not need to store the packaged application code 1180 corresponding to application 630 (cf. FIG. 2) or the packaged data collection 1184 corresponding to input data collection 642 (cf. FIG. 2) and may also not need to use the communication couplings 592 (cf. FIG. 1) and 190 (cf. FIG. 1) to transport the packaged data collection 1184 and packaged application code 1180 from the consumer client 501 (cf. also FIG. 1) over the broker system 201 (cf. also FIG. 1) to the worker client 101 (cf. FIG. 1). The broker system 201 (cf. also FIG. 1) may further need to pre-allocate one or more worker clients 101, 102 (cf. FIG. 1) before a job specification 1188 corresponding to a job 610 (cf. FIG. 2) is submitted by the consumer client 501 (cf. also FIG. 1). The pre-allocated worker clients 101, 102 (cf. FIG. 1) may be communicated to the consumer client 501 (cf. also FIG. 1), which may then commence the sending of the packaged application code 1180 or the packaged data collection 1184 to the pre-allocated worker client 101 (cf. FIG. 1) over the communication coupling 595 (cf. FIG. 1). The broker system 201 (cf. also FIG. 1) may exclusively use the pre-allocated worker clients to run the job 610 (cf. FIG. 2) corresponding to the job specification 1188. Alternatively, sending the packaged application code 1180 or the packaged data collection 1184 from the consumer client 501 (cf. also FIG. 1) to the worker clients 101, 102 (cf. FIG. 1) may be deferred until after the broker system 201 (cf. also FIG. 1) has scheduled the job 610 (cf. FIG. 2) corresponding to the submitted job specification 1188 in the process task scheduling 1600 (cf. FIG. 10). After the broker system 201 (cf. also FIG. 1) has evaluated on the at least one or more worker clients 101, 102 (cf. FIG. 1) which execute tasks 615 (cf. FIG. 2) of job 610 (cf. FIG. 2), these worker clients 101, 102 (cf. FIG. 1) would subsequently retrieve the packaged application code 1180 or the packaged data collection 1184 from the consumer client 501 (cf. also FIG. 1).

FIG. 5 shows an exemplary flow chart indicating a sequence of steps performed by a broker system 201 (cf. also FIG. 1) and an intermediary system 401 (cf. also FIG. 1) as part of the computer system 100 (cf. FIG. 1) when dynamically allocating one or more worker clients 101, 102 (cf. FIG. 1). Dynamically allocating worker clients 101, 102 (cf. FIG. 1) is the process of sourcing new worker clients which may not have been known to the broker system 201 (cf. FIG. 1) and making these worker clients at least temporarily part of system 100 (cf. FIG. 1). This process worker client allocation 1200 (cf. also FIG. 3) follows the process job receipt 1100 (cf. FIGs.3, 4).

In step 1202, the technical requirements of the job 610 (cf. FIG. 2) concerning worker clients 101, 102 (cf. FIG. 1) are determined. These requirements may express the demands of the backend application 634 (cf. FIG. 2) which belongs to the job 610 (cf. FIG. 2), with regards to the respective runtime environment. For instance, the technical requirements may specify the programming model and runtime container(e.g., JAVASCRIPT, ORCLE JAVA, ADOBE FLASH, MICROSOFT SILVERLIGHT, GOOGLE NATIVECLIENT, MICROSOFT ACTIVEX) which is used by the background application 634 (cf. FIG. 2). The technical requirements may further specify the hardware platform (e.g., instruction set supported by the Central Processing Unit (CPU)). In another example, the technical requirements may specify APIs which need to be provided by the runtime environment (e.g., WebSockets, WebGL, WebCL, WebWorker). In yet another example, quantitative requirements on the runtime environment (e.g., minimum amount of Random Access Memory (RAM), minimum network bandwidth, minimum screen resolution and size) may be part of the technical requirements.

Step 1202 may also determine non-technical job requirements, which relate to business, legal, performance, quality of service, or other aspects of job execution. For example, job 610 (cf. FIG. 2) may require obeying a certain monetary cost threshold. Or, the job 610 (cf. FIG. 2) may require its tasks 615 (cf. FIG. 2) to be executed on worker clients 101, 102 (cf. FIG. 1) residing in certain geographical or organizational zones (e.g., specific countries or within a company). An example for a performance-related requirement is a minimum data throughput threshold, which is the number of data items from the input data collection 642 (cf. FIG. 2) processed in a given time interval. A quality of service requirement may, for example, be a replication of a plurality of identical tasks 615 (cf. FIG. 2) for the job 610 (cf. FIG. 2) onto different worker clients 101, 102 (cf. FIG. 1).

In step 1204, the broker system 201 (cf. also FIG. 1) evaluates the suitability of currently connected worker clients 101, 102 (cf. FIG. 1) by means of the job requirements determined in step 1202. To perform the evaluation, the broker system 201 (cf. also FIG. 1) may compare the context data of the worker clients (e.g., worker client 101, cf. FIG. 1) which do currently connect to the broker system 201 (cf. also FIG. 1) through a temporary communicative coupling (e.g. coupling 190, cf. FIG. 1) to the job requirements. For example, the worker client context data may include details about a worker client's runtime environment features such as the availability of certain runtime APIs or the physical location of the worker client 101, 102 (cf. FIG. 1). The broker system 201 (cf. also FIG. 1) may further compare the job requirements to characteristics of the intermediary system 401 (cf. also FIG. 1) through which a worker client 101, 102 (cf. FIG. 1) may have initiated the connection to the broker system 201 (cf. also FIG. 1). For example, the intermediary system 401 (cf. also FIG. 1) may specify monetary prices for using a worker client 101, 102 (cf. FIG. 1), which may be used by the broker system 201 (cf. also FIG. 1) to determine whether a cost threshold for a job 610 (cf. FIG. 2) can be obeyed. The broker system 201 (cf. also FIG. 1) may also compare the characteristics of the temporary communication coupling 190 (cf. FIG. 1) of a worker client 101 (cf. FIG. 1) to the broker system 201 (cf. also FIG. 1). For instance, the broker system 201 (cf. also FIG. 1) may compare the network bandwidth and the cost of sending or receiving data over this communication coupling. The broker system 201 (cf. also FIG. 1) may also compare the current state of the broker system 201 (cf. also FIG. 1) itself to evaluate the suitability of connected worker clients 101, 102 (cf. FIG. 1) to perform the job 610 (cf. FIG. 2). For instance, the total number of connected worker clients may be compared against the task replication requirements as part of a possible quality of service requirement. The broker system 201 (cf. also FIG. 1) may further compare the accumulated performance from the plurality of all connected worker clients 101, 102 (cf. FIG. 1) against the performance requirements determined in step 1202.

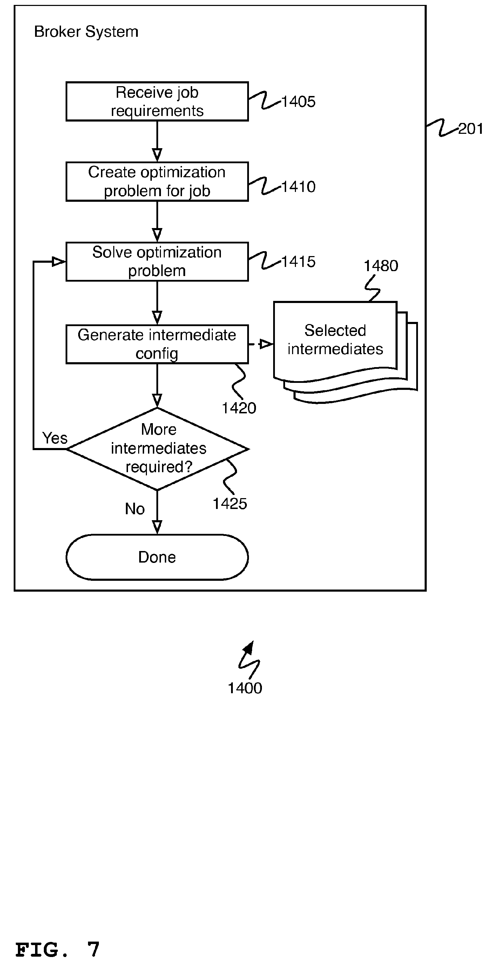

In step 1206, it is evaluated whether the connected worker clients are suitable, based on the result of step 1204. If the connected worker clients 101, 102 (cf. FIG. 1) are suitable, the process task scheduling 1600 (cf. FIG. 10) is invoked. Otherwise, an optional process intermediary selection 1400 (cf. also FIG. 7) may be invoked which determines a subset of intermediary systems 401 (cf. also FIG. 1) from the plurality of all intermediary systems.

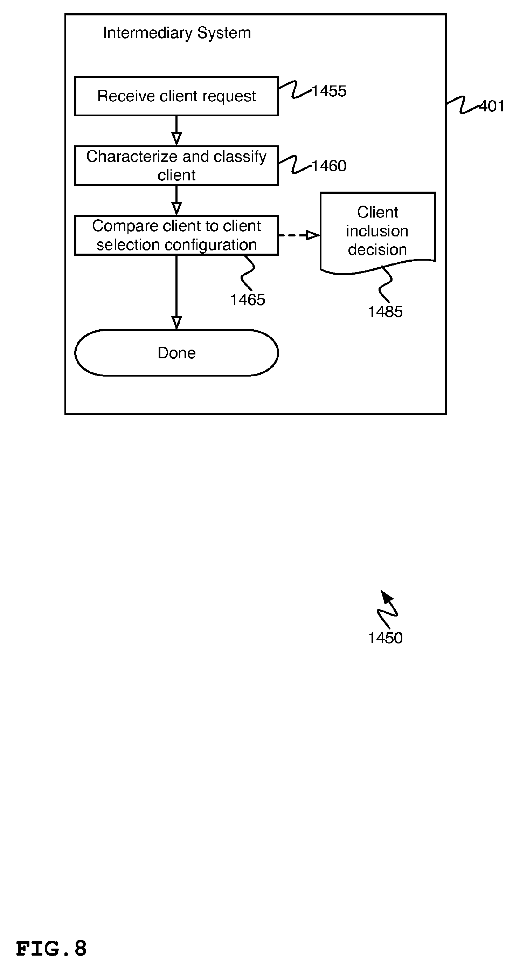

In step 1208, the intermediary interface component 213 (cf. FIG. 1) of broker system 201 (cf. also FIG. 1) sends a computing resource request 1280 to the subset of intermediary systems 401 (cf. also FIG. 1) determined in process intermediary selection 1400 (cf. also FIG. 7) or another suitable plurality of intermediary systems. The computing resources request 1280 states to an intermediary system 401 (cf. also FIG. 1) a demand for newly connecting worker clients 101, 102 (cf. FIG. 1). The broker system 201 (cf. also FIG. 1) may send the same computing resource request 1280 to the plurality of intermediary systems or may send different computing resource requests 1280 to the plurality of intermediary systems, wherein each request may specify an individual demand from this particular intermediary system. The computing resource request 1280 document may specify a total number of additionally required worker clients 101, 102 (cf. FIG. 1) and may further constrain the type of worker clients to be selected by the process intermediary pre-selection 1450 (cf. FIG. 8) where the constraints may be expressed in terms of the job requirements identified in step 1202 or any other requirement towards a worker client that can be checked by an intermediary system 401 (cf. also FIG. 1) when a worker client 101, 102 (cf. FIG. 1) connects to the intermediary system.

In step 1210, the intermediary system 401 (cf. also FIG. 1) receives the computing resource request 1280 from the communication coupling 493 (cf. FIG. 1) on the broker interface component 413 (cf. FIG. 1). In step 1212, the client selection component 430 (cf. FIG. 1) of the intermediary system 401 (cf. also FIG. 1) creates client selection configuration 432 (cf. FIG. 1) from the computing resources request 1280 where the client selection configuration 432 (cf. FIG. 1) may be a technical artifact suitable to identify worker clients 101, 102 (cf. FIG. 1) connecting to the intermediary system 401 (cf. also FIG. 1) with respect to the computing resource request 1280. For example, the client selection configuration may be a filtering rule applied to the user agent string of worker clients 101, 102 (cf. FIG. 1) being World Wide Web browsers. In another example, the client selection component may be a geo-mapping component, which looks up the geographic location of a worker client 101, 102 (cf. FIG. 1) by means of its technical address, such as an Internet Protocol (IP) address.

FIG. 7 shows an exemplary flow chart indicating a sequence of steps performed by a broker system 201 (cf. also FIG. 1) when selecting one or more intermediary systems before allocating further worker clients. The flow chart shows an exemplary embodiment of the process intermediary selection 1400, which may be invoked from process worker client allocation 1200 (cf. FIG. 5) to determine a set of intermediary systems 401 (cf. FIG. 1). The selection of intermediary systems is based on the job requirements determined in step 1202 of process worker client allocation 1200 (cf. FIG. 5).

In step 1405, the broker system 201 (cf. also FIG. 1) receives the job requirements that were determined in step 1202 (cf. FIG. 5). In step 1410, the broker system creates an optimization problem, which may be a mathematical representation of the goals and constraints contained in the job requirements.

The optimization problem created in step 1410 may include constraints such as tests performed on metadata gathered about an intermediary system. For example, these constraints may require the intermediary system to be located in a certain geographical region, to cater for a certain average worker client visit duration (i.e., the time span within which a worker client 101, 102 (cf. FIG. 1) is steadily connected to the broker system 201 (cf. also FIG. 1)), or any other test that can be established on known or contractually defined facts about an intermediary system 401 (cf. FIG. 1). The optimization problem may further include a function expressing one or more goals for the job 610 (cf. FIG. 2) under consideration. These goals may be derived from the job requirements identified in step 1202 (cf. FIG. 5) by selecting any requirement which is formulated as a minimization or maximization of one or more variables from the intermediary system metadata. For example, the job requirements may entail a minimization of monetary cost to run the job 610 (cf. FIG. 2). In another example, the job requirements may entail a minimization of processing time to run the job 610 (cf. FIG. 2). In a further example, an aggregate computed from the sum of weighted cost and weighted processing time is to be minimized. Finally, the optimization problem created in step 1410 may entail requirements on worker clients such as certain characteristics of the runtime environment. These characteristics may, for example, be permanent features (e.g., CPU instruction set or availability of certain runtime APIs). In another example, these characteristics may relate to the current, temporary state of the worker client 101 (cf. FIG.1), such as the technical infrastructure underneath the communication coupling 494 (cf. FIG. 1) between the worker client (cf. FIG. 1) and the intermediary system 401 (cf. FIG. 1), which may be a network having certain bandwidth, signal latency, and cost characteristics. An example of temporary characteristics of a worker client 101, 102 (cf. FIG. 1) which is a mobile device (e.g., a smartphone or a tablet computer) may also include the physical location of the worker client 101, 102 (cf. FIG. 1) and the battery charge status.

In step 1415, the optimization problem created in step 1410 is solved in order to receive a ranked list of intermediary systems 401 (cf. FIG. 1). First, the constraints which are part of the optimization problem on the plurality of intermediary systems 401 (cf. FIG. 1) are tested. One embodiment of step 1415 may iterate over the plurality of intermediary systems 401 (cf. FIG. 1) which are known to the broker system 201 (cf. also FIG. 1). For each intermediary system 401 (cf. FIG. 1), the broker system 201 (cf. also FIG. 1) tests the constraints on metadata characterizing the intermediary system 401 (cf. FIG. 1) including its contractual relationship to the operator of the broker system 201 (cf. also FIG. 1) and excludes any intermediary system 401 (cf. FIG. 1) which does not pass the test. For example, a constraint on the geographical region of the intermediary system 401 (cf. FIG. 1) may exclude any intermediary residing outside the country where the broker system 201 (cf. also FIG. 1) is operated by testing a constraint like "location of intermediary system = Australia". Second, the function expressing the goals of the job requirements is applied to the plurality of intermediary systems 401 (cf. FIG. 1) which have passed the constraints. An example embodiment of step 1415 may evaluate the result of applying the function to the intermediary system metadata for each qualifying intermediary system 401 (cf. FIG. 1). Third, the intermediary system 401 (cf. FIG. 1) having the lowest or highest function result, respectively, may be selected. For example, an optimization goal expressed by a function "minimize cost of sourcing worker clients through intermediary" may be evaluated by consulting the Cost per Impression (CPI) which is the price charged by an intermediary system 401 (cf. FIG. 1) to inject the broker reference 422 (cf. FIG. 1) into the network response to the worker clients 101, 102 (cf. FIG. 1). In another example, the goal may be the CPI weighted with the time duration of worker clients 101, 102 (cf. FIG. 1) connecting through an intermediary where the time duration may be intermediary system 401 (cf. FIG. 1) metadata which is statistically captured (e.g., stored and averaged) by the broker system 201 (cf. also FIG. 1) from previous interactions with worker clients 101, 102 (cf. FIG. 1) connecting through the specific intermediary system 401 (cf. FIG. 1) under consideration. The function expressing the goal may, for example, be "maximize average time duration of worker client visits divided by CPM". In summary, in step 1415, an intermediary system 401 (cf. FIG. 1) which passes the constraints of the optimization problem created in step 1410 and which yields the lowest or highest value of applying the function expressing the optimization goal to the intermediary system metadata is selected. An alternative embodiment of step 1415 may use efficient access structures and search algorithms such as hash table lookups or traversal of indexes based on tree structures (e.g., binary trees, red-black trees) to evaluate the constraints and goal function on the intermediary systems' 401 (cf. FIG. 1) metadata.

In step 1420, the client selection configuration 432 (cf. FIG. 1) for the intermediary system 401 (cf. FIG. 1) selected in step 1415 is generated by translating the worker client requirements from the optimization problem received in step 1410 into a format suitable for the characteristics of the intermediary system 401 (cf. FIG. 1). For example, an intermediary system 401 (cf. FIG. 1) such as a World Wide Web site, the client selection configuration 432 (cf. FIG. 1) may be a regular expression on the user agent string which is an identifier provided by a worker client that details some technical characteristics of the worker client 101, 102 (cf. FIG.1)(e.g., vendor, product name, version number of the World Wide Web browser used by the worker client and operating system). In another example, the client selection configuration 432 (cf. FIG. 1) may be a Web service invocation to a geo-mapping service or database, which relates the worker client's address (such as an IP address) to the approximate physical location of the worker client. A further example of a client selection configuration 432 (cf. FIG. 1) may be an invocation of computer network diagnostic tools to measure the characteristics of the communication coupling 494 (cf. FIG. 1) between the intermediary system 401 (cf. FIG. 1) and the worker client 101 (cf. FIG.1), such as the type of the network (e.g., ADSL, fiber network, mobile network), the bandwidth of the network, the signal traveling time, and others where these characteristics are compared against the worker client requirements of the optimization problem from step 1410. An intermediary system 401 (cf. FIG. 1) such as an organizational network proxy which provides the connection gateway of all worker clients 101, 102 (cf. FIG. 1) located within the organization to the Internet, another client selection configuration 432 (cf. FIG. 1) may, for example, relate a worker client 101 (cf. FIG. 1) connecting to the intermediary system 401 (cf. FIG. 1) to a person such as an employee of the organization, a department, a job role or similar characteristics which may be tested for when selecting suitable worker clients (e.g., worker clients operated by users within a circle of trust). In summary, in step 1420, the broker system 201 (cf. also FIG. 1) may generate a plurality of different client selection configurations 432 (cf. FIG. 1) which are suitable to be evaluated by the client selection component 430 (cf. FIG. 1) of the respective intermediary system 401 (cf. FIG. 1). In step 1420, the intermediary system selected in step 1415 is further added to the plurality of selected intermediary systems 1480.

In step 1425, it is evaluated whether the plurality of selected intermediary systems 1480 collectively satisfies the job requirements received in step 1405. The result obtained in step 1425 may, for example, be based on a contractually agreed or statistically sampled number of worker clients 101, 102 (cf. FIG. 1) which may be connected to the broker system 201 (cf. also FIG. 1) through the selected intermediary systems 1480 in a given period of time which may, for example, be an upper threshold for the job processing time as defined in the job requirements received in step 1405. If more intermediary systems beyond those intermediary systems already contained in the selected intermediaries 1480 are required, the process intermediary selection 1400 continues at step 1415 of the flow chart in FIG. 7. Otherwise, the process intermediary selection 1400 ends and then returns to process worker client allocation 1200 of the flow chart in FIG. 5.

FIG. 6 shows an exemplary flow chart indicating a sequence of steps performed by a broker system 201 (cf. also FIG. 1), a worker client 101 (cf. also FIG. 1), and an intermediary system 401 (cf. also FIG. 1) when initiating a connection from the worker client 101 (cf. also FIG. 1) through the intermediary system 401 (cf. also FIG. 1) and with the broker system 201 (cf. also FIG. 1). The process connection initiation 1300 may be executed asynchronously to other processes performed by a broker system 201 (cf. also FIG. 1). It may further be started and executed without a prior completion and without a casual dependency on the process job receipt 1100 (cf. FIG. 4) where a job 610 (cf. FIG. 2) is received by the broker system 201 (cf. also FIG. 1). The process connection initiation 1300 may further be started by an external actor such as a user or a technical component accessing a worker client 101 (cf. also FIG.1), which triggers the process connection initiation 1300. A plurality of instances of the process connection initiation 1300 may also exist and may represent a plurality of worker clients 101, 102 (cf. FIG. 1) accessing the broker system 201 (cf. also FIG. 1).

In step 1302, the intermediary interface component 114 (cf. FIG. 1) of a worker client 101 (cf. also FIG. 1) sends a network request 1380 to the intermediary system 401 (cf. also FIG. 1) using the temporary communication coupling 494 (cf. FIG. 1) between worker client 101 (cf. also FIG. 1) and intermediary system 401 (cf. also FIG. 1). When the intermediary system 401 (cf. also FIG. 1) is a World Wide Web site, a Content Delivery Network (CDN), an Application Server, or some other server endpoint on the Internet, an organizational Intranet, or any other network connecting the worker client 101 (cf. also FIG. 1) and intermediary system 401 (cf. also FIG. 1), the network request 1380 may, for example, be a Hypertext Transfer Protocol (HTTP) request, a SAP DIAGNOSTIC RESPONDER (DIAG) protocol request, a MICROSOFT DISTRIBUTED COMPONENT OBJECT MODEL (DCOM) protocol request or any other protocol message suitable to request resources from an intermediary system 401 (cf. also FIG. 1), which is sent to a network address such as an Uniform Resource Locator (URL) of the intermediary system 401 (cf. also FIG. 1). When the intermediary system 401 (cf. also FIG. 1) is a network proxy server, a network gateway, a network firewall, a network access point or any other type of network component which may be used to transfer outgoing network requests of worker client 101 (cf. also FIG.1), the network request 1380 may, for example, be a Hypertext Transfer Protocol (HTTP) request, a Network News Transfer Protocol (NNTP) request, an Internet Message Access Protocol (IMAP) request or another type of network protocol request, which is sent to a system or component outside of system 100 (cf. FIG. 1) over the communication infrastructure used by worker client 101 (cf. also FIG. 1) (e.g., communication couplings 190, 494, and 595 in FIG. 1). When intermediary system 401 (cf. also FIG. 1) is a component local to a worker client 101 (cf. also FIG. 1) such as a network interface (e.g., interface 111, 114, and 115 in FIG. 1), a local firewall, or another component which is used to process network traffic on the worker client 101 (cf. also FIG.1), the network request 1380, may, for example, be a local procedure call, a portion of shared local memory, which may be accessed by the intermediary interface component 114 (cf. FIG. 1) and the intermediary system 401 (cf. also FIG. 1), or any other type of local message passing on the worker client 101 (cf. also FIG. 1). In step 1304, the network request 1380 is received by the worker client interface component 414 (cf. FIG. 1) on the intermediary system 401 (cf. also FIG. 1).

After receiving the network request 1380 in step 1304, the intermediary system 401 (cf. also FIG. 1) may optionally invoke the process intermediary pre-selection 1450 (cf. also FIG. 8) to evaluate whether the worker client 101 (cf. also FIG.1), which has connected to the intermediary system 401 (cf. also FIG. 1) in step 1302, is selected for further connecting to the broker system 201 (cf. also FIG. 1). In an alternative embodiment of process connection initiation 1300, process intermediary pre-selection 1450 (cf. also FIG. 8) is skipped and intermediary system 401 (cf. also FIG. 1) may not apply further selection procedures to filter out connecting worker clients 101, 102 (cf. FIG. 1).

In step 1306, the broker reference embedding component 420 (cf. FIG. 1) of intermediary system 401 (cf. also FIG. 1) may embed a broker reference 422 (cf. FIG. 1) into the network response 1382 which may be sent back to the worker client 101 (cf. also FIG. 1). When the intermediary system 401 (cf. also FIG. 1) is a World Wide Web site, a Content Delivery Network (CDN), an Application Server, or some other server endpoint on the Internet, an organizational Intranet, or any other network connecting the worker client 101 (cf. also FIG. 1) and intermediary system 401 (cf. also FIG. 1), the broker reference embedding component 420 (cf. FIG. 1) may for example be part of the request processing pipeline of the intermediary system 401 (cf. also FIG. 1) such as a component in a World Wide Web request processing stack where the broker reference 422 (cf. FIG. 1) may be a included in a response document template from which all network responses 1382 are instantiated. When the intermediary system 401 (cf. also FIG. 1) is a network proxy server, a network gateway, a network firewall, a network access point or any other type of network component which may be used to transfer outgoing network requests of worker client 101 (cf. also FIG.1), the broker reference embedding component 420 (cf. FIG. 1) may be an instruction which is a rewrite rule applied to the network response data received after transferring the network request 1380 to an external system and receiving a network response 1382 from the external system. For instance, the broker reference 422 (cf. FIG. 1) may be embedded as a Hypertext Markup Language (HTML) element referencing a script located at the broker reference 422 (cf. FIG. 1) which may be a URL.

In step 1308, the network response 1382 having the broker reference 422 (cf. FIG. 1) is received by the intermediary interface component 114 (cf. FIG. 1) of the worker client 101 (cf. also FIG.1), which previously sent the network response 1380 in step 1302. In step 1310, the data contained in network response 1382 is parsed and interpreted by the worker client 101 (cf. also FIG. 1). When the worker client 101 (cf. also FIG. 1) is a World Wide Web browser, the network response 1382 data may be a Hypertext Markup Language (HTML) document, which is parsed and interpreted by the rendering component of the World Wide Web browser. When the worker client 101 (cf. also FIG. 1) is an ORACLE JAVA virtual machine (JVM), the network response 1382 data may be JAVA byte code file such as a JAVA ARCHIVE (JAR) file. Other technical realizations of worker clients 101, 102 (cf. FIG. 1) may request different suitable types of network responses 1382, which can be parsed or interpreted by the worker client 101, 102 (cf. FIG. 1). Interpreting the network response 1382 may further entail interpreting an instruction to retrieve further resources from the embedded broker reference 422 (cf. FIG. 1).

In step 1312, the worker client 1312 may, as a result of retrieving the embedded broker reference 422 (cf. FIG. 1) from the network response 1382 in step 1308, perform a network request 1384 to the broker system 201 (cf. also FIG. 1) using the broker reference 422 (cf. FIG. 1). In step 1314, the request 1384 is received by the worker client interface component 211 (cf. FIG. 1) of the broker system 201 (cf. also FIG. 1). In step 1316, the broker system 201 (cf. also FIG. 1) delivers the runtime environment code 1386 of the worker client runtime environment 120 (cf. FIG. 1) to the broker interface component 111 (cf. FIG. 1) of the worker client 101 (cf. also FIG.1), where it is received in step 1318. When the worker client 101 (cf. also FIG. 1) is a World Wide Web browser, the runtime environment code 1386 may, for example, be a plurality of JAVASCRIPT and HTML files. In another example, when the worker client 101 (cf. also FIG. 1) is an ORACLE JAVA virtual machine, the runtime environment code 1386 may be a JAR file. In another example, when the worker client 101 (cf. also FIG. 1) is a GOOGLE CHROME World Wide Web browser, the runtime environment code 1386 may be a GOOGLE NATIVE CLIENT binary program file. In another example, when the worker client 101 (cf. also FIG. 1) is a World Wide Web browser supporting the KHRONOS GROUP WEBCL specification, the runtime environment code 1386 may be a plurality of KHRONOS GROUP WEBCL or OPENCL program code, JAVASCRIPT script code, and HTML markup code. Generally, the runtime environment code 1386 may be one or more program code or script files suitable to be executed by a worker client 101, 102 (cf. FIG. 1).

In step 1320, a worker client 101 (cf. also FIG. 1) parses and subsequently interprets the runtime environment code 1386, where the worker client creates an instance of the worker client runtime environment 120 (cf. FIG. 1), which is an object in the main memory of worker client 101 (cf. also FIG. 1). The worker client runtime environment 120 (cf. FIG. 1) may subsequently perform interactions with the broker system 201 (cf. also FIG. 1) and may host and execute tasks 615 (cf. FIG. 2) received from the broker system 201 (cf. also FIG. 1). In step 1322, the worker client runtime environment 120 (cf. FIG. 1) submits a request 1388 to sign up and register the worker client 101 (cf. also FIG. 1) at the broker system 201 (cf. also FIG. 1) to signal the subsequent availability of the worker client 101 (cf. also FIG. 1) to receive and process tasks 615 (cf. FIG. 2).

In step 1324, the worker client interface component 211 (cf. FIG. 1) of the broker system 201 (cf. also FIG. 1) receives the client signup request 1388. In step 1326, the broker system 201 (cf. also FIG. 1) creates a worker client identifier 1390 such as for example a Globally Unique Identifier (GUID). In step 1328, the broker system 201 (cf. also FIG. 1) sends the worker client identifier 1390 to the worker client 101 (cf. also FIG. 1). In step 1330, the worker client identifier 1390 is received by the broker interface component 111 (cf. FIG. 1) of the worker client 101 (cf. also FIG. 1) and subsequently passed to the worker client runtime environment 120 (cf. FIG. 1) where it is cached in the main memory. The worker client runtime environment 120 (cf. FIG. 1) may subsequently use the worker client identifier 1390 to identify itself to the broker system 201 (cf. also FIG. 1) in any exchange of data. After completing step 1328, the broker system 201 (cf. also FIG. 1) starts the process worker client assessment 1500 (cf. also FIG. 9).

FIG. 8 shows an exemplary flow chart indicating a sequence of steps performed by an intermediary system 401 (cf. also FIG. 1) when pre-selecting a worker client 101, 102 (cf. FIG. 1) before connecting it to a broker system 201 (cf. FIG. 1). In other words, process intermediary pre-selection 1450 is an exemplary embodiment of a pre-selection processes which may be performed by an intermediary system 401 (cf. also FIG. 1) when evaluating whether to embed a broker reference 422 (cf. FIG. 1) into a network response 1382 (cf. FIG. 6), which is sent to a worker client 101 (cf. FIG. 1) and upon which a worker client 101 (cf. FIG. 1) may connect to the broker system 201 (cf. FIG. 1).

In step 1455, the worker client interface component 414 (cf. FIG. 1) receives a network request 1380 (cf. FIG. 6) from a worker client 101 (cf. FIG. 1). In step 1460, the client selection component 430 (cf. FIG. 1) of the intermediary system 401 (cf. also FIG. 1) characterizes the worker client 101 (cf. FIG.1), which has sent the network request 1380 (cf. FIG. 6). The worker client characterization is performed with respect to a client selection configuration 432 (cf. FIG. 1), which was configured at the intermediary system 401 (cf. also FIG. 1) in step 1212 (cf. FIG. 5). The client selection configuration 432 (cf. FIG. 1) defines which properties of a worker client 101 (cf. FIG.1) can be determined in step 1460 to characterize and classify the worker client 101 (cf. FIG. 1).For example, for a client selection configuration 432 (cf. FIG. 1) requiring to select worker clients 101, 102 (cf. FIG. 1) being World Wide Web browsers capable of running tasks 615 (cf. FIG. 2) which make use of the KHRONOS GROUP WEBGL API, in step 1460 the user agent string of the worker client's World Wide Web browser which may later be used to look up the provided runtime APIs from a database of known World Wide Web browser capabilities may be retrieved. In another example, if the client selection configuration 432 (cf. FIG. 1) specifies to only select worker clients 101 (cf. FIG. 1) using a communication coupling 494 (cf. FIG. 1) which is a WLAN or wired network connection, in step 1460 a network diagnostics of the temporary communication coupling 494 (cf. FIG. 1) to determine its technical characteristics may be performed.

In step 1465, the client selection component 430 (cf. FIG. 1) of an intermediary system 401 (cf. also FIG. 1) evaluates, based on the previously configured client selection configuration 432 (cf. FIG. 1) and the worker client characterization performed in step 1460 whether to later embed the broker reference 422 (cf. FIG. 1) into the network response 1382 (cf. FIG. 6) to the worker client 101 (cf. FIG. 1). The evaluation is performed by comparing the properties of the worker client characterization and the client selection configuration 432 (cf. FIG. 1). Upon a match, the client selection component 430 (cf. FIG. 1) creates a client inclusion decision 1485 for the worker client 101 (cf. FIG. 1). For example, if and only if both the KHRONOS GROUP WEBGL API exists on the given worker client 101 (cf. FIG. 1) and the worker client 101 (cf. FIG. 1) connects to the intermediary system 401 (cf. also FIG. 1) through a WLAN or wired connection, a client inclusion decision 1485 is created.

FIG. 9 shows an exemplary flow chart indicating a sequence of steps performed by a broker system 201 (cf. also FIG. 1) and a worker client 101 (cf. also FIG. 1) when estimating the performance of the worker client 101 (cf. also FIG. 1) and the time duration of the transient current participation of the worker client101 (cf. also FIG. 1) within a computer system 100 (cf. FIG. 1). In other words, process worker client assessment 1500 is a process for assessing a worker client 101 (cf. also FIG. 1) before running any tasks 615 (cf. FIG. 2) on this worker client 101 (cf. also FIG. 1).

In step 1502 and after completing the process connection initiation 1300 (cf. FIG. also 6), the worker client interface component 211 (cf. FIG. 1) of broker system 201 (cf. also FIG. 1) sends a client context request 1580 to the worker client 101 (cf. also FIG.1), which has connected to the broker system 201 (cf. also FIG. 1) in process connection initiation 1300 (cf. also FIG. 6). The client context request 1580 may specify at least one worker client context properties, which may be information about the worker client 101 (cf. also FIG. 1) such as its technical characteristics (e.g., the device hardware components and their properties, the software platform, the availability of certain runtime APIs), its user identity (e.g., the user name and organization, his or her role within the organization), its location and local time, its current usage (e.g., the consumed network bandwidth, the CPU load, the number of operating process threads or processes, the size of free main memory, the battery charge level), local constraints and policies (e.g., network bandwidth caps, usage quotas on the worker client 101 (cf. also FIG. 1) like in multi-user environments, other legal, intellectual property, or organizational policies like for processing 3^{rd} party owned input data collections 642 (cf. FIG. 2), running 3^{rd} party owned backend applications 634 (cf. FIG. 2), disallowing certain backend application 634 (cf. FIG. 2) and input data collection 642 (cf. FIG. 2) types), the network characteristics of the communication coupling 190 (cf. FIG. 1) between the worker client 101 (cf. also FIG. 1) and the broker system 201 (cf. also FIG. 1) (e.g., the type of network such as WLAN, Digital Subscriber Line - DSL networks, mobile networks; the Internet Service Provider), the name and type of intermediary system 401 (cf. FIG. 1) through which the connection from the worker client 101 (cf. also FIG. 1) to the broker system 201 (cf. also FIG. 1) was originally established or any other information about the worker client 101 (cf. also FIG. 1) and the context of its current connection to the broker system 201 (cf. also FIG. 1). The specific plurality of worker client context properties, which are queried in the client context request 1580 depends on the requirements of the broker system 201 (cf. also FIG. 1) to later assess the suitability of the worker client 101 (cf. also FIG. 1) to process tasks 615 (cf. FIG. 2) which belong to certain jobs 610 (cf. FIG. 2). The client context request 1580 may encompass querying for portions of the computing resource request 1280 (cf. FIG. 5), which was originally used to configure the worker client request processing at the client selection component 430 (cf. FIG. 1) of an intermediary system 401 (cf. FIG. 1). The client context request 1580 may further encompass querying for worker client context properties which may be used by the broker system 201 (cf. also FIG. 1) to forecast an expected worker client visit duration length, which is the time interval within which the temporary communication coupling 190 (cf. FIG. 1) between the worker client 101 (cf. also FIG. 1) and the broker system 201 (cf. also FIG. 1) exists and the worker client 101 (cf. also FIG. 1) may receive and process tasks 615 (cf. FIG. 2). The client context request 1580 may further encompass querying for worker client properties, which may be used by the broker system 201 (cf. also FIG. 1) to estimate performance characteristics (e.g., processing time, data throughput) of the worker client 101 (cf. also FIG. 1) to process specific tasks 615 (cf. FIG. 2). For example, the client context request 1580 may query the cache status of the worker client 101 (cf. also FIG. 1) to identify backend applications 634 (cf. FIG. 2) or data collections 640 (cf. FIG. 2) (which may be input data collections 642 (cf. FIG. 2) or output data collections 644 (cf. FIG. 2)) which are already present in main memory or local persistent storage of the worker client 101 (cf. also FIG. 1).

In step 1504, the client context request 1580 is received by the broker interface component 111 (cf. FIG. 1) of a worker client 101 (cf. FIG.1), which may pass the client context request to the client context component 126 (cf. FIG. 1). In step 1506, the client context component 126 (cf. FIG. 1) may probe the worker client 101 (cf. FIG.1), its current usage context (e.g., the user operating the device at the given point in time, the current location and time), the communication coupling 190 (cf. FIG. 1) which may be a network, and the intermediary system 401 (cf. FIG. 1) through which the worker client 101 (cf. also FIG. 1) has initiated the connection to the broker system 201 (cf. also FIG. 1) to assemble a client context data 1582 document which matches the client context request 1580 and provides the requested worker client context properties. For instance, the client context component 126 (cf. FIG. 1) may use a number of APIs and technologies which are available to the worker client runtime environment 120 (cf. FIG. 1) to gather the requested data, such as dynamic feature detection where the availability of certain JAVASCRIPT runtime APIs can be determined by checking for the existence of the corresponding named JAVASCRIPT language entities in the global JAVASCRIPT namespace. In another example, in step 1506 the runtime APIs (e.g., W3C BATTERY STATUS API (W3C Candidate Recommendation, 8 May 2012), W3C NETWORK INFORMATION API (W3C Working Draft, 29 November 2012), W3C GEOLOCATION API (W3C Proposed Recommendation, 1 May 2012), Document Object Model (DOM) of a World Wide Web browser, or any other API available to the worker client runtime environment 120 (cf. FIG. 1) to determine certain worker client context properties) may be invoked. In another example, in step 1506 the internal status of the worker client runtime environment 120 (cf. FIG. 1) (e.g., a backend application 634 (cf. FIG. 2) or data collection 640 (cf. FIG. 2) cache or data structures maintaining the currently running tasks 615 (cf. FIG. 2) to determine certain worker client context properties such as the local availability of backend applications 634 (cf. FIG. 2) and data collections 640 (cf. FIG. 2) or the current usage of the worker client 101 (cf. FIG. 1) in terms of concurrently running tasks 615 (cf. FIG. 2)) may be checked.

In step 1508, the client context data 1582, which was assembled in step 1506, is passed back to the broker system 201 (cf. also FIG. 1) using the communication coupling 190 (cf. FIG. 1). In step 1510 the worker client interface component 211 (cf. FIG. 1) of the broker system 201 (cf. also FIG. 1) receives the client context data 1582.

In step 1512, the evaluation component 230 (cf. FIG. 1) of the broker system 201 (cf. also FIG. 1) may predict the time duration of the worker client's 101 (cf. FIG. 1) current visit, which is the time interval within which the communication coupling 190 (cf. FIG. 1) exists and the worker client 101 (cf. FIG. 1) may receive and process tasks 615 (cf. FIG. 2). The evaluation component 230 (cf. FIG. 1) may use predictive analytics algorithms to estimate the likely client visit duration (e.g., a statistical expectancy value or a quantile of the client visit duration). In one embodiment of an evaluation component 230 (cf. FIG. 1), a statistical technique based on parametric regression analysis may be used where the broker system maintains a database of past client visit durations and related client context data 1582 and the worker client visit duration is the dependent variable. A regression model may be fitted to the database of observed client visit durations and associated client context data 1582 records, assuming a statistical model (example.g., a pre-defined linear regression function) and using estimation methods (example.g., least-squares estimation, quantile regression). The current worker client visit duration may then be estimated by applying the fitted regression model to the current client context data 1582. In an alternative embodiment of evaluation component 230 (cf. FIG. 1), other predictive analytics may be used, for example, machine learning techniques using neural networks where a database of past worker client visit durations and associated client context data 1582 forms the training data of a neural network which models the previously unknown relationship between a client visit duration to the client context data 1582 and to predict the client visit duration. In either of these techniques, updating the underlying model (e.g., fitting a regression model or training a neural network) may either happen progressively, for example, after each worker client visit or at regular time intervals, or may alternatively be performed manually by an operator of the broker system 201 (cf. also FIG. 1) at discrete points in time.

Predicting the worker client visit duration in step 1512 may be based on the assumption of correlations between client context data 1582 properties and the worker client visit duration which is a probability variable. An alternative embodiment of system 100 (cf. FIG. 1) or a complementary capability of system 100 (cf. FIG. 1) may provide a behavior of the worker clients 101 (cf. also FIG.1), 102 (cf. FIG. 1) and the broker system 201 (cf. also FIG. 1) where the client visit duration may be prolonged by involving the user of a worker client. In one example, a worker client 101 (cf. FIG. 1) may provide progress indicators showing the progress of completing running tasks 615 (cf. FIG. 2) on a worker client 101 (cf. also FIG. 1) to motivate a user operating the worker client 101 (cf. also FIG. 1) to manually prolong the worker client visit duration like by refraining from closing a World Wide Web browser window hosting the worker client runtime environment 120 (cf. FIG. 1). In another example, the progress indicator may be augmented or replaced with a visual feedback of earned discrete incentives (e.g., monetary micro-payment units, carbon dioxide savings from reduced data center usage, completeness indicators of jobs 610 (cf. FIG. 2) being large-scale computing challenges or any other type of moral or real incentives), which may accumulate and increase with prolonged worker client visit duration.

Another example of prolonging worker client visit durations may be by multiple worker clients 101 (cf. also FIG.1), 102 (cf. FIG. 1) sharing the processing of a task 615 (cf. FIG. 2). In one embodiment of sharing task processing, multiple worker clients 101 (cf. also FIG.1), 102 (cf. FIG. 1) on a single physical device may collaborate to process a task 615 (cf. FIG. 2) using a system where the worker client runtime environment 120 (cf. FIG. 1) is shared between a plurality of worker clients 101 (cf. also FIG.1), 102 (cf. FIG. 1). Terminating one worker client 101 (cf. also FIG. 1) from the plurality of worker clients 101 (cf. also FIG.1), 102 (cf. FIG. 1) and ceasing the temporary communication coupling 190 (cf. FIG. 1) between the worker client 101 (cf. also FIG. 1) and the broker system 201 (cf. also FIG. 1) may allow the other worker client(s) of the plurality of worker clients to resume executing the plurality of tasks 615 (cf. FIG. 2) which are currently running in the shared worker client runtime environment 120 (cf. FIG. 1). For instance, the shared worker client runtime environment 120 (cf. FIG. 1) may be an instance of a JAVASCRIPT Shared Web Worker object which may be interacted with from multiple pages or tabs of a World Wide Web browser running on the single physical device of the plurality of worker clients 101 (cf. also FIG.1), 102 (cf. FIG. 1).

In another embodiment of sharing task processing, multiple worker clients 101 (cf. also FIG.1), 102 (cf. FIG. 1) running consecutively on the same physical device where the first worker client 101 (cf. also FIG. 1) terminates and ceases the communication coupling 190 (cf. FIG. 1) to the broker system 201 (cf. also FIG. 1) before the second worker client 102 (cf. FIG. 1) starts and connects to the broker system 201 (cf. also FIG. 1), may implement a local failover capability where the intermediate state of running a task 615 (cf. FIG. 2) is stored in a shared storage system which retains its content after the first worker client 101 (cf. also FIG. 1) terminates. The second worker client 102 (cf. FIG. 1) may, upon being started and connecting to the broker system 201 (cf. also FIG. 1) retrieve and recover unfinished tasks 615 (cf. FIG. 2) from the shared storage system and resume their execution, where the evaluation on whether to resume a previously unfinished task may be based on the progress of a task 615 (cf. FIG. 2) and the cost of repeating the execution in a new worker client, the timely interval since the task 615 (cf. FIG. 2) was interrupted, instructions received from the broker system 201 (cf. also FIG. 1) on how to handle suspended local tasks 615 (cf. FIG. 2), and any other criteria suitable to assess the economic and technical meaningfulness of resuming an interrupted task 615 (cf. FIG. 2) in a new worker client 102 (cf. FIG. 1). For example, an implementation of suspending and later resuming tasks 615 (cf. FIG. 2) may be based on local persistent storage APIs such as JAVASCRIPT APIs like Indexed Database (IndexedDB, W3C Working Draft, 24 May 2012), Web SQL Database (WebSQL, W3C Working Group Note, 18 November 2010), Web Storage (W3C Proposed Recommendation, 9 April 2013) and others, where a first worker client 101 (cf. FIG. 1) running a task 615 (cf. FIG. 2) may store a state of the task 615 (cf. FIG. 2), which is suitable to restore the task 615 (cf. FIG. 2) in another worker client 102 (cf. FIG. 1), in the local storage at regular save points (e.g., in fixed time intervals or after completing certain milestones of executing a task 615 (cf. FIG. 2)). After terminating the first worker client 101 (cf. also FIG.1), the second worker client 102 (cf. FIG. 1) may access the local persistent storage, retrieve the latest persisted state of the task 615 (cf. FIG. 2), reconstruct the task 615 (cf. FIG. 2) instance from the persisted state and resume its execution in the worker client runtime environment of the second worker client 102 (cf. FIG. 1). For instance, this approach may apply to a World Wide Web browser, which successively accesses different World Wide Web sites. A first Word Wide Web site may contain the broker reference 422 (cf. FIG. 1) and, thus, bootstrap a first worker client 101 (cf. also FIG.1), which may start running a task 615 (cf. FIG. 2). While running task 615 (cf. FIG. 2), the first worker client 101 (cf. also FIG. 1) may serialize and store snapshots of the task state within the local persistent storage system. When the user leaves the first World Wide Web site and navigates to a second World Wide Web site, the worker client 101 (cf. also FIG. 1) is terminated. If the second and any subsequent World Wide Web site contains the broker reference 422 (cf. FIG. 1), a second worker client 102 (cf. FIG. 1) may be started and may retrieve the serialized state of the running task 615 (cf. FIG. 2), may further reconstruct the task instance from the serialized state, and resume its execution.

In another embodiment of sharing task processing, a plurality of worker clients 101 (cf. also FIG.1), 102 (cf. FIG. 1) which may run on the same or different physical hardware and which may be temporarily communicatively coupled using peer-to-peer communication infrastructure such as the WEBRTC DataChannel API may collaborate and mutually exchange serialized states of the tasks 615 (cf. FIG. 2) which are executed by the plurality of worker clients 101 (cf. also FIG.1), 102 (cf. FIG. 1). When a first worker client 101 (cf. also FIG. 1) terminates and disconnects from the broker system 201 (cf. also FIG. 1) before completing a task 615 (cf. FIG. 2), a second worker client 102 (cf. FIG. 1) may continue processing the task 615 (cf. FIG. 2) based on the serialized state of the task 615 (cf. FIG. 2) it had previously received from worker client 101 (cf. also FIG. 1). The broker system 201 (cf. also FIG. 1) may further explicitly instruct the second worker client 102 (cf. FIG. 1) to resume an interrupted task 615 (cf. FIG. 2) originating from a terminated worker client 101 (cf. also FIG. 1). In a variant of this embodiment, the broker system 201 (cf. also FIG. 1) may further define a plurality of worker clients 101 (cf. also FIG.1), 102 (cf. FIG. 1) which mutually exchange serialized task state snapshots where the exchange of task state snapshots may also happen unidirectional, where a first worker client 101 (cf. also FIG. 1) sends the serialized state snapshots of the tasks 615 (cf. FIG. 2) which it runs to a second worker client 102 (cf. FIG. 1) but not vice versa.

In order to compensate for interrupted execution of tasks 615 (cf. FIG. 2) on terminated worker clients 101 (cf. also FIG.1), 102 (cf. FIG. 1), system 100 (cf. FIG. 1) may provide for a data streaming interface where the input data collection 642 (cf. FIG. 2) and the output data collection 644 (cf. FIG. 2) are progressively sent to the worker clients 101 (cf. also FIG.1), 102 (cf. FIG. 1) and broker system 201 (cf. also FIG. 1) or consumer client 501 (cf. FIG. 1), respectively. A task 615 (cf. FIG. 2) may be started by the worker client runtime environment 120 (cf. FIG. 1) of a worker client 101 (cf. also FIG. 1) before the complete data chunk 646 (cf. FIG. 2) (i.e., the part of the input data collection 642 (cf. FIG. 2) which is processed by this task) was received by the worker client 101 (cf. also FIG. 1) and when a small subset of the data chunk 646 (cf. FIG. 2) was received through the data streaming interface. Vice versa, a worker client 101 (cf. also FIG. 1) may start sending small subsets of the output data collection 644 (cf. FIG. 2) to the broker system 201 (cf. also FIG. 1) or consumer client 501 (cf. FIG. 1) as soon as the small subsets of the output data collection 644 (cf. FIG. 2) are produced by the running task 615 (cf. FIG. 2). In an exemplary embodiment of the data streaming interface, streaming protocols (e.g., Real Time Streaming Protocol (RTSP), JAVASCRIPT WebSockets, Asynchronous JAVASCRIPT and XML (AJAX)) and APIs (e.g., WEBRTC, MICROSOFT CU-RTC-WEB, JAVASCRIPT XMLHttpRequest (W3C Working Draft, 6 December 2012)) may be used to provide for the capability of a worker client 101 (cf. also FIG. 1) and its broker interface component 111 (cf. FIG. 1) or consumer client interface component 115 (cf. FIG. 1) to read and write small subsets of the input data collection 642 (cf. FIG. 2) (e.g., the data chunk 646 (cf. FIG. 2) which was assigned to the running task 615 (cf. FIG. 2)) and output data collection 644 (cf. FIG. 2) while the task 615 (cf. FIG. 2) is running. When a task 615 (cf. FIG. 2) execution is interrupted due to a terminated worker client 101 (cf. also FIG.1), the broker system 201 (cf. also FIG. 1) or consumer client 501 (cf. FIG. 1) may have received a subset of the output data collection 644 (cf. FIG. 2) up to the point where the task 615 (cf. FIG. 2) was interrupted. A subsequent task, which may be scheduled on another worker client 102 (cf. FIG. 1), may skip the portion of the input data collection 642 (cf. FIG. 2) for which the broker system 201 (cf. also FIG. 1) or consumer client 501 (cf. FIG. 1) has already received the corresponding portion of the output data collection 644 (cf. FIG. 2).

Coming back to process worker client assessment 1500, in step 1514 it is evaluated whether the client visit duration, which was predicted in step 1512, is sufficiently long to run any task 615 (cf. FIG. 2) on the worker client 101 (cf. also FIG. 1) at all. For example, the test performed in step 1514 may be based on a fixed time threshold specifying a lower bound to worker client visit durations. In another example, the test performed in step 1514 may be based on the characteristics of the jobs 610 (cf. FIG. 2), which were submitted to the broker system 201 (cf. also FIG. 1) before and are currently pending execution. A job 610 (cf. FIG. 2), may, for instance, refer to a backend application 634 (cf. FIG. 2) where the size of the application code requires a certain time to be sent to the worker client 101 (cf. also FIG. 1) over the communication coupling 190 (cf. FIG. 1) and require some more time to be instantiated on the worker client 101 (cf. also FIG. 1). A predicted worker client visit duration below these accumulated times may disqualify the respective worker client 101 (cf. also FIG. 1) from being considered such that in step 1514 it may be evaluated to discard the worker client 101 (cf. also FIG. 1). If a worker client 101 (cf. also FIG. 1) is discarded in step 1514, the broker system 201 (cf. also FIG. 1) disconnects from the worker client 101 (cf. also FIG. 1) and waits for other worker clients to connect in process connection initiation 1300 (cf. FIG. 6).

If the predicted worker client visit duration is estimated as being sufficient in step 1514, step 1516 may store the client context data 1582 alongside the estimated worker client visit duration in a database upon which step 1512 may, for worker clients connecting at a later time, perform a refined predictive analytics of the worker client visit duration.

In step 1518, the evaluation component 230 (cf. FIG. 1) of broker system 201 (cf. also FIG. 1) looks up and retrieves performance benchmark results for the type of the worker client 101 (cf. also FIG.1), where the type of the worker client 101 (cf. also FIG. 1) is a suitable combination of the hardware and software characteristics from the client context data 1582. For example, for a worker client 101 (cf. also FIG. 1) which runs on a tablet computer a suitable combination of hardware and software characteristics may specify the type and make of the tablet computer and the name and version of the World Wide Web browser (e.g., APPLE IPAD 4^{TH} GENERATION, IOS VERSION 6). When a worker client runs on a personal computer, the suitable combination of hardware and software characteristics may be the type, make and clock speed of the CPU, the operating system, and the World Wide Web browser (e.g., INTEL CORE 17 3770K, 2.4 GHZ, MICROSOFT WINDOWS 8, GOOGLE CHROME 26). Generally, the combination of hardware and software characteristics must be suitable to assess the performance of the worker client 101 (cf. also FIG. 1), for example, the expected time duration of a certain backend application 634 (cf. FIG. 2) run on standardized input data, or the volume data from an input data collection 642 (cf. FIG. 2) which may be processed in a certain time interval. Step 1518 may use the suitable hardware and software combination as a lookup key to retrieve a plurality of all stored benchmark values, being results of previous benchmark runs on a platform similar or identical to worker client 101 (cf. also FIG. 1).

In step 1520, the evaluation component 230 (cf. FIG. 1) may evaluate if the plurality of stored benchmark values contains at least one benchmark value that is representative of the workload represented by job 610 (cf. FIG. 2). The evaluation may, for instance, be based on the job specification 1188 (cf. FIG. 4), which may state a standard benchmark as being representative of the job's 610 (cf. FIG. 2) behavior and the fact whether this standard benchmark is contained in the plurality of stored benchmark values from step 1518. If evaluation component 230 (cf. FIG. 1) evaluates in step 1520 that there is at least on benchmark value among the plurality of benchmark values from step 1518, the process continues by invoking the process task scheduling 1600 (cf. also FIG. 10). Otherwise, in step 1522, a micro-benchmark code 1584 is selected where the selection may, again, be based on the job specification 1188 (cf. FIG. 4) and the standard benchmark which may be stated in there. For instance, a job specification may state a standard benchmark name (e.g., WEBKIT SUNSPIDER, MOZILLA KRAKEN, or GOOGLE OCTANE benchmark for JAVASCRIPT and the LINPACK or STANDARD PERFORMANCE EVALUATION SPECFP and SPECINT benchmarks for native code). In another example, the micro-benchmark code may be based on the backend application 634 (cf. FIG. 2) code (or a portion thereof) of a job 610 (cf. FIG. 2) where the backend application 634 (cf. FIG. 2) was passed a small, representative sample data chunk.

In step 1524, the broker system 201 (cf. also FIG. 1) sends the micro-benchmark code 1584 to the worker client 101 (cf. also FIG. 1) where it is received in step 1526. In step 1528, the micro-benchmark code 1528 is parsed, instantiated, and run by the worker client's benchmarking component 128 (cf. FIG. 1). The benchmarking component 128 (cf. FIG. 1) may observe and record at least one performance indicator, such as the total time duration of the benchmark run, the data throughput or other performance indicators representative of running a task program 122 (cf. FIG. 1) which is the instantiation of a task 615 (cf. FIG. 2) on a worker client 101 (cf. also FIG. 1). The benchmarking component 128 (cf. FIG. 1) may further perform a plurality of repetitive runs of the micro-benchmark code 1584 to determine the mean of median of the respective performance indicators.

In 1530, the measured performance indicators are sent back to the broker system 201 (cf. also FIG. 1) as benchmark results 1586. In step 1532, the broker system 201 (cf. also FIG. 1) receives the benchmark results 1586. In step 1534, the benchmark results 1586 are stored in a database, using the worker client type, which is the suitable hardware and software characteristics of the worker client 101 (cf. also FIG. 1) from step 1518, as lookup key.

FIG. 10 shows an exemplary flow chart indicating a sequence of steps performed by a broker system 201 (cf. also FIG. 1) when selecting one or more suitable worker clients 101, 102 (cf. FIG. 1) to run one or more tasks 615 (cf. FIG. 2) from a job 610 (cf. FIG. 2). In other words, process task scheduling 1600 may be performed by the compute job component 240 (cf. FIG. 1) of the broker system 201 (cf. also FIG. 1) to schedule the tasks 615 (cf. FIG. 2) of the job 610 (cf. FIG. 2) for execution on at least one worker client 101 (cf. FIG. 1).

Step 1604 follows the process worker client assessment 1500 (cf. also FIG. 9) and may, from the plurality of worker clients 101, 102 (cf. FIG. 1), which are currently connected to the broker system 201 (cf. also FIG. 1), select a subset of idle worker clients. The compute job component 240 (cf. FIG. 1) of a broker system 201 (cf. also FIG. 1) may maintain a list of connected worker clients 101, 102 (cf. FIG. 1) alongside with the plurality of tasks, which may be assigned to each worker client. The broker system 201 (cf. also FIG. 1) may further determine the maximum number of tasks, which may run concurrently on a worker client 101, 102 (cf. FIG. 1) from the corresponding client context data 1582 (cf. FIG. 9). For instance, the maximum number of concurrent tasks may be linked to the number of physical CPU cores on the device running the respective worker client 101, 102 (cf. FIG. 1). A worker client 101, 102 (cf. FIG. 1) may be considered idle when the number of currently running tasks on the worker client 101, 102 (cf. FIG. 1) lies below the maximum number of concurrent tasks on that worker client.

In step 1608, the client context data 1582 (cf. FIG. 9), which was received in step 1510 (cf. FIG. 9), is looked up for the idle worker clients. In step 1612, any idle worker clients not suitable to process tasks 615 (cf. FIG. 2) of the job 610 (cf. FIG. 2) are excluded from later being scheduled to execute tasks 615 (cf. FIG. 2) of job 610 (cf. FIG. 2). The exclusion may be based on mismatches between the client context data 1582 (cf. FIG. 9) and job specification 1188 (cf. FIG. 4) such as an unsuitable software or hardware environment on a worker client 101, 102 (cf. FIG.1), an unsuitable location of a worker client 101, 102 (cf. FIG.1), an unsuitable user operating the device of the worker client 101, 102 (cf. FIG. 1) (e.g., only running tasks 615 (cf. FIG. 2) of a job 610 (cf. FIG. 2) on worker clients 101, 102 (cf. FIG. 1) which belong to specific known users), an unsuitable intermediary system 401 (cf. FIG. 1) through which the worker client 101, 102 (cf. FIG. 1) has connected to the broker system 201 (cf. also FIG. 1) or any other mismatch between the goals and constraints expressed in the job specification 1188 (cf. FIG. 4) and the client context data 1582 (cf. FIG. 9).

In step 1616, it is determined whether after applying step 1612, there are any idle worker clients remaining on which tasks 615 (cf. FIG. 2) of a job 610 (cf. FIG. 2) could be run. If no, the process worker client allocation 1200 (cf. also FIG. 5) to allocate additional worker clients is triggered. Otherwise, in step 1620 the size of a data chunk 646 (cf. FIG. 2), which is passed to a new task 615 (cf. FIG. 2) of job 610 (cf. FIG. 2), is determined by inferring a the portion of the input data collection 642 (cf. FIG. 2) which can be processed on a worker client 101, 102 (cf. FIG. 1) having an estimated worker client visit duration predicted in step 1512 (cf. FIG. 9) and a known benchmark result 1586 (cf. FIG. 9). In one example, the size of the data chunk 646 (cf. FIG. 2) is computed by multiplying the benchmark result 1586 (cf. FIG. 9) which may be the throughput of data from the input data collection 642 (cf. FIG. 2) on the worker client 101, 102 (cf. FIG. 1) with the predicted client visit duration of this worker client.

In step 1624, a new task 615 (cf. FIG. 2) may be created for a data chunk 646 (cf. FIG. 2) from the input data collection 642 (cf. FIG. 2) having the data chunk size determined in step 1620. Subsequently, process code and data deployment 1700 (cf. also FIG. 11) deploys and runs the task 615 (cf. FIG. 2) on a worker client 101, 102 (cf. FIG.1), while step 1628 updates the corresponding job 610 (cf. FIG. 2) by adjusting the job status in compliance with the job's programming model. For instance, for a job programming model that is Map-Reduce, the job status may be updated to "mapping" or "reducing". Or, for a job programming model that is a workflow where a process model defines the logical ordering of tasks 615 (cf. FIG. 2), the job status may be updated to keep track of the currently executed step in the job's process model. Further updates performed in step 1628 may affect an offset into the input data collection 642 (cf. FIG. 2) to memorize the portion of the input data collection 642 (cf. FIG. 2), which was already assigned to tasks 615 (cf. FIG. 2) of this job 610 (cf. FIG. 2) or any other job status required to warrant a correct execution of the job 610 (cf. FIG. 2).

In step 1632, the compute job component 240 (cf. FIG. 1) of the broker system 201 (cf. also FIG. 1) evaluates whether more tasks need to be spawned on worker clients 101, 102 (cf. FIG. 1) in order to complete the job 610 (cf. FIG. 2). The evaluation in step 1632 may, for instance, be based on the fact whether all data from the input data collection 642 (cf. FIG. 2) was assigned to tasks 615 (cf. FIG. 2) of this job. In another example and where the job programming model is Map-Reduce, the evaluation in step 1632 may be based on the fact whether the last the "reduce" phase of the job was completed and all "reduce" tasks have finished their run. In another example, the evaluation of step 1632 may be based on the fact whether any tasks 615 (cf. FIG. 2) of job 610 (cf. FIG. 2) were terminated before fully processing their data chunk 646 (cf. FIG. 2) and passing back the corresponding portions of the output data collection 644 (cf. FIG. 2). If the evaluation of step 1632 indicates that more tasks are required, process task scheduling 1600 may continue at step 1616.

FIG. 11 shows an exemplary flow chart indicating a sequence of steps performed by a broker system 201 (cf. also FIG. 1) and a worker client 101 (cf. also FIG. 1) when deploying a backend application 634 (cf. FIG. 2) and an input data collection 642 (cf. FIG. 2) of a job from the broker system 201 (cf. also FIG. 1) to the worker client 101 (cf. also FIG. 1). In other words, in process code and data deployment 1700 the broker system 201 (cf. also FIG. 1) deploys the program code of the backend application 634 (cf. FIG. 2) and the data chunk 646 (cf. FIG. 2) onto a worker client 101 (cf. also FIG. 1). Process code and data deployment 1700 succeeds process task scheduling 1600 (cf. also FIG. 10), where the worker clients 101 (cf. also FIG.1), 102 (cf. FIG. 1) to run tasks 615 (cf. FIG. 2) of a job 610 (cf. FIG. 2) were determined.

In step 1702, the deployment component 250 (cf. FIG. 1) of the broker system 201 (cf. also FIG. 1) may send a task specification 1780 to a worker client 101 (cf. also FIG.1), where it is received in step 1704. The task specification 1704 may be a document representing a subset of the job specification 1188 (cf. FIG. 4), comprising a subset of the plurality job parameters 620 (cf. FIG. 2), a reference to the backend application 634 (cf. FIG. 2), a reference to a data chunk 646 (cf. FIG. 2) of the input data collection 642 (cf. FIG. 2), a reference to the output data collection, and further data suitable to govern the execution of a task 615 (cf. FIG. 2) on a worker client 101 (cf. also FIG. 1). For instance, the task specification 1780 may, beyond what is contained in the job specification 1188 (cf. FIG. 4), detail the type of the task 615 (cf. FIG. 2), according to a specific programming model (e.g., in Map-Reduce a "mapping" task), an identifier of the task such as a GUID, instructions from where and by means of which protocol the data chunk 646 (cf. FIG. 2) is to be retrieved (e.g., from consumer client 501 (cf. FIG. 1) using a peer-to-peer connection through WEBRTC DataChannel API), instructions about if and when to save snapshots of the task program 122 (cf. FIG. 1) (representing the instantiated task 615 (cf. FIG. 2) in the worker client runtime environment 120 (cf. FIG. 1) of some worker client 101 (cf. also FIG. 1)) to a local persistent storage or any other information suitable to govern the execution of a task 615 (cf. FIG. 2) on a worker client 101 (cf. also FIG. 1). In step 1706, the task specification 1780 is parsed into the individual task specification items, including a reference 1782 to the backend application 634 (cf. FIG. 2) and a reference 1786 to the data chunk 646 (cf. FIG. 2).

In step 1708, the worker client runtime environment 120 (cf. FIG. 1) determines whether the backend application 634 (cf. FIG. 2) already exists as an instantiated object in main memory. For instance, for worker clients 101 (cf. also FIG. 1) being World Wide Web browsers running a JAVASCRIPT interpreter, this could be a JAVASCRIPT object or function. If an instantiated representation of the backend application 634 (cf. FIG. 2) already exists, the process continues with step 1714. Otherwise, in step 1710 another test where the backend application 634 (cf. FIG. 2) code is looked up in the local cache is performed. The local cache may, for instance, be a persistent local storage system, accessible through JAVASCRIPT APIs such as Web Storage, WebSQL, or IndexedDB. In another example, the local cache may be provided by the worker client 101 (cf. also FIG. 1) as a platform capability, such as the built-in content caching capabilities of a World Wide Web browser. If the backend application 634 (cf. FIG. 2) code is available in a local cache, the task program 622 is instantiated from the cached backend application 634 (cf. FIG. 2) code in step 1712.

If the backend application 634 (cf. FIG. 2) code is neither available as an instantiated in-memory object nor resides in a local cache of the worker client 101 (cf. also FIG.1), in step 1720 a request to the broker system 201 (cf. also FIG. 1) is sent, stating the backend application reference 1782 which may be a unique identifier such as a URL of the backend application code. In an alternative embodiment of process code and data deployment 1700, the backend application 634 (cf. FIG. 2) code may be retrieved from another system such as the consumer client 501 (cf. FIG. 1) or another worker client 102 (cf. FIG. 1) using suitable communication protocols.

In step 1722 the backend application reference 1782 may be received by the worker client interface component 211 (cf. FIG. 1) of the broker system 201 (cf. also FIG. 1). In step 1724, the application code 1784 of the backend application 634 (cf. FIG. 2) is retrieved from a storage system local to the broker system 201 (cf. also FIG. 1), such as a database, the file system or any other storage system suitable to look up the application code 1784 by means of the backend application reference 1782. The application code 1784 may be script file (e.g., a JAVASCRIPT file), binary code (e.g., JAVA archives), an assembly of multiple script or binary code files, or any other format suitable to be instantiated and run in the worker client runtime environment 120 (cf. FIG. 1) of a worker client 101 (cf. also FIG. 1).

In step 1726, the application code 1784 of the backend application 634 (cf. FIG. 2) is sent back to the worker client 101 (cf. also FIG. 1). In step 1728, the application code 1784 is received by the broker interface component 111 (cf. FIG. 1) of the worker client 101 (cf. also FIG. 1). The worker client runtime environment 120 (cf. FIG. 1) instantiates the application code 1784 into a task program 122 (cf. FIG. 1).

In step 1714, the worker client runtime environment 120 (cf. FIG. 1) may perform a test to determine whether the data chunk 646 (cf. FIG. 2), which is the input data for the task program 122 (cf. FIG. 1) is already present in main memory of the worker client 101 (cf. also FIG. 1). For instance, the same data chunk 646 (cf. FIG. 2) or a superset of the data chunk 646 (cf. FIG. 2) may have been retrieved and used by another task on the worker client. In another example, a predecessor task may have produced a portion or all of the input data collection 642 (cf. FIG. 2) from which the data chunk 646 (cf. FIG. 2) is extracted. If the data chunk 646 (cf. FIG. 2) is present in main memory of the worker client 101 (cf. also FIG.1), the process continues with invoking process task execution and failover 1800 (cf. also FIG. 12), which executes the task program 122 (cf. FIG. 1). If the data chunk 646 (cf. FIG. 2) is not present in the main memory of the worker client 101 (cf. also FIG.1), the worker client 101 (cf. also FIG. 1) proceeds to step 1716 where the data chunk 646 (cf. FIG. 2) is looked up in a local cache of the worker client 101 (cf. also FIG. 1) (e.g., a persistent data storage facility accessible through JAVASCRIPT APIs like Web Storage, WebSQL, IndexedDB). If the data chunk 646 (cf. FIG. 2) is present in a local cache of the worker client 101 (cf. also FIG.1), in step 1718 the data chunk 646 (cf. FIG. 2) is loaded, which is the input data of the task program 122 (cf. FIG. 1) from the local cache and proceeds to process task execution and failover 1800 (cf. also FIG. 12) where the task is executed.

If the data chunk 646 (cf. FIG. 2) does not exist in the local cache of the worker client 101 (cf. also FIG.1), in step 1730 the broker interface component 111 (cf. FIG. 1) of the worker client 101 (cf. also FIG. 1) sends a request stating a data chunk reference 1786 such as a URL to the broker system 201 (cf. also FIG. 1). In step 1722, the data chunk reference 1786 is received by the worker client interface component 211 (cf. FIG. 1) of the broker system 201 (cf. also FIG. 1). In step 1734, the broker system 201 (cf. also FIG. 1) opens the corresponding input data collection 642 (cf. FIG. 2) on a storage system local to the broker system 201 (cf. also FIG. 1), specifying the fragment of the input data collection 642 (cf. FIG. 2), which is represented by the data chunk 646 (cf. FIG. 2). In one embodiment of the broker system 201 (cf. also FIG. 1), the data chunk 646 (cf. FIG. 2) may be accessed as a data stream where individual items from the data chunk 646 (cf. FIG. 2) are progressively sent to the worker client 101 (cf. also FIG. 1) using suitable technologies like database cursors to progressively fetch data items from the database in and asynchronous communication protocols, such as AJAX, to progressively send data items to the worker client 101 (cf. also FIG. 1). In step 1736, a data stream handle 1788 which may be a URL is sent to the worker client 101 (cf. also FIG. 1). In step 1738, the data stream handle 1788 to the data chunk 646 (cf. FIG. 2) is received by the broker interface component 111 (cf. FIG. 1) of the worker client 101 (cf. also FIG. 1).

In an alternative embodiment of process code and data deployment 1700, the data chunk 646 (cf. FIG. 2) may be retrieved from another system, which is different from the broker system 201 (cf. also FIG. 1). For instance, the worker client 101 (cf. also FIG. 1) may retrieve a data chunk 646 (cf. FIG. 2) directly from the consumer client 501 (cf. FIG. 1), which has submitted the job 610 (cf. FIG. 2) to which the task 615 (cf. FIG. 2) belongs. Worker clients 101 (cf. also FIG. 1) may also retrieve a data chunk 646 (cf. FIG. 2) from another worker client 102 (cf. FIG. 1) which may have produced the data chunk 646 (cf. FIG. 2) as part of an output data collection 644 (cf. FIG. 2) or which may have cached the data chunk 646 (cf. FIG. 2). A further example may implement a streaming approach where a first task running on a first worker client 101 (cf. also FIG. 1) produces portions of an output data collection 644 (cf. FIG. 2) which form a data chunk 646 (cf. FIG. 2) that is consumed by a second task running on a second worker client 102 (cf. FIG. 1). The second task on the second worker client 102 (cf. FIG. 1) may start running and consuming data items from the data chunk 646 (cf. FIG. 2) while the first task running on the first worker client 101 (cf. also FIG. 1) is still writing data items into the corresponding output data collection 644 (cf. FIG. 2). In order to facilitate this collaborative task execution, a streaming peer-to-peer execution may be used between the first worker client 101 (cf. also FIG. 1) and the second worker client 102 (cf. FIG. 1), where reading a data item from the stream by the second task may only succeed if that data item has been produced by the first task.

FIG. 12 shows an exemplary flow chart indicating a sequence of steps performed by a broker system 201 (cf. also FIG. 1) and a worker client 101 (cf. also FIG. 1) when running a task 615 (cf. FIG. 2) on the worker client 101 (cf. also FIG. 1). In other words, process task execution and failover 1800 shows a task 615 (cf. FIG. 2) which is represented as a task program 122 (cf. FIG. 1) in the worker client runtime environment 120 (cf. FIG. 1) on a worker client 101 (cf. also FIG.1), wherein the task (cf. FIG. 2) is executed on a worker client 101 (cf. also FIG. 1) and the broker system 201 (cf. also FIG. 1) orchestrates the associated job execution.

Following the process code and data deployment 1700 (cf. also FIG. 11), in step 1824 the broker system 201 (cf. also FIG. 1) waits for the task 615 (cf. FIG. 2) running on a worker client 101 (cf. also FIG. 1) to complete. Waiting for an external event such as a task completion to happen may actually consume computing resources such as CPU processing time slices on the broker system 201 (cf. also FIG. 1).

On the worker client 101 (cf. also FIG.1), in step 1802, the worker client runtime environment 120 (cf. FIG. 1) extracts the plurality of parameters 620 (cf. FIG. 2) from the task specification 1780 (cf. FIG. 11). In step 1804, the worker client runtime environment 120 (cf. FIG. 1) may spawn a new operating system thread or process to run the task program 122 (cf. FIG. 1) representing a task 615 (cf. FIG. 2). An operating system thread or process may permit for a concurrent execution of a task program 122 (cf. FIG. 1) without blocking or suspending other operations of a worker client 101 (cf. also FIG. 1). For example, a separate operating system thread or process may allow for fully utilizing a plurality of hardware resources such as CPU cores, Graphics Processing Unit (GPU) Streaming Multiprocessors (SMP) and others which may be available on the device running a worker client 101 (cf. also FIG. 1). For instance, the worker client runtime environment 120 (cf. FIG. 1) may use APIs such as JAVASCRIPT Web Worker, POSIX Threads, KHRONOS GROUP WEBGL and WEBCL and other suitable APIs available on the worker client 101 (cf. also FIG. 1) to spawn new task processing threads. In another embodiment of process task execution and failover 1800, the task program 120 (cf. FIG. 1) may be run in the same operating system thread or process, which may be shared with other operations of the worker client 101 (cf. also FIG. 1). The task program 122 (cf. FIG. 1) may use time-slicing techniques such as cooperative multi-tasking where the task program 122 (cf. FIG. 1) periodically suspends its work to pass control to other operations of the worker client 101 (cf. also FIG. 1).

Step 1806 represents the run of a task program 122 (cf. FIG. 1), which processes a task 615 (cf. FIG. 2) within the operating system thread or process, which was spawned in step 1804. Running a task program 122 (cf. FIG. 1) may entail instantiating the application code 1784 (cf. FIG. 11) representing a backend application 634 (cf. FIG. 2) using dynamic code injection mechanisms, which are available to the worker client 101 (cf. also FIG. 1). Examples for dynamic code injection mechanisms may be ORACLE JAVA class loaders, JAVASCRIPT functions such as "eval", or any other API provided by the software platform of the worker client 101 (cf. also FIG.1), which is suitable to make new program code like application code 1784 (cf. FIG. 11) available, where the worker client runtime environment 120 (cf. FIG. 1) may subsequently execute the new program code. In step 1806, invoking the application code 1784 (cf. FIG. 11) within the operating system thread or process and passing the plurality of parameters 620 (cf. FIG. 2), extracted in step 1802 to the application code 1784 (cf. FIG. 11), may also be entailed.

During the execution of the application code 1784 (cf. FIG. 11), representing a backend application 634 (cf. FIG. 2), the running task program 122 (cf. FIG. 1) may in step 1812 progressively report the task progress 1880 or other status updates to the broker system 201 (cf. also FIG. 1). In step 1814, the broker system 201 (cf. also FIG. 1) may receive task progress reports 1880 on the worker client interface component 211 (cf. FIG. 1) and notify the plurality of task progress monitors, which may be registered at the broker system 201 (cf. also FIG. 1). For instance, a task progress monitor may be a monitoring tool where administrators can observe the task execution progress in a visual dashboard. In another example, the consumer client 501 (cf. FIG. 1) from where the job 610 (cf. FIG. 2) originates may be a task progress monitor, which is updated upon incoming task progress reports 1880.

In step 1816, the task program 122 (cf. FIG. 1) running in step 1806 may read input data items 1882 from the data chunk 646 (cf. FIG. 2) which is associated with the task 615 (cf. FIG. 2) underneath the task program 122 (cf. FIG. 1). Reading input data items 1882 from the data chunk 646 (cf. FIG. 2) may happen progressively by retrieving small portions of data from the data stream handle 1788 (cf. FIG. 11). In an alternative embodiment of step 1816, reading input data items 1882 may happen in a single step where the entire data chunk 646 (cf. FIG. 2) is passed to the task program 122 (cf. FIG. 1) running in step 1806 at once. Step 1818 provides the input data items 1882 on the broker system 201 (cf. also FIG. 1) by accessing the underlying storage system such as a database, a file system, or another storage system suitable to store input data collections 642 (cf. FIG. 2). In an alternative embodiment of process task execution and failover 1800, the input data items 1882 may be provided from another system, which is different to the broker system 201 (cf. also FIG. 1), such as the consumer client 501 (cf. FIG. 1) or a storage system, which is external to system 100 (cf. FIG. 1).

In step 1820, the task program 122 (cf. FIG. 1) running in step 1806 may write output data items 1884 to the output data collection 644 (cf. FIG. 2), which is associated with the job 610 (cf. FIG. 2) of the task 615 (cf. FIG. 2) underneath task program 122 (cf. FIG. 1). Writing output data items 1884 may happen progressively by sending small portions of data to the output data collection 644 (cf. FIG. 2), which is identified in the job specification 1188 (cf. FIG. 4) and the task specification 1780 (cf. FIG. 11). For example, if the output data collection 644 (cf. FIG. 2) is stored at the broker system 201 (cf. also FIG. 1), step 1822 receives the output data items 1884 at the worker client interface component 211 (cf. FIG. 1) of the broker system 201 (cf. also FIG. 1) and may store the output data item 1884 in a data storage system local to the broker system 201 (cf. also FIG. 1). In an alternative embodiment of process task execution and failover 1800, in step 1820, the output data stream items 1884 are sent to another system or component within system 100 (cf. FIG. 1), such as the consumer client 501 (cf. FIG. 1) or another worker client 101 (cf. also FIG. 1). A further embodiment of process task execution and failover 1800 may send in step 1820 the output data items 1884 to a system or component external to system 100 (cf. FIG. 1), such as a Cloud-based storage system like AMAZON S3, GOOGLE DRIVE, MICROSOFT SKYDRIVE or any other storage system suitable to store an output data collection 644 (cf. FIG. 2).

In step 1808, the worker client runtime environment 120 (cf. FIG. 1) of a worker client 101 (cf. also FIG. 1) may, after completing a task program 122 (cf. FIG. 1), send a task completion notification 1886 to the broker system 201 (cf. also FIG. 1). The worker client interface component 211 (cf. FIG. 1) of the broker system 201 (cf. also FIG. 1) may receive the task completion notification 1886 in step 1834, making step 1824 ceases to wait for the task completion and in step 1826 it is evaluated if the task 634 (cf. FIG. 2) has not been interrupted.

In step 1810, the worker client runtime environment 120 (cf. FIG. 1) of the worker client 101 (cf. also FIG. 1) terminates the operating system thread or process, which ran the task program 122 (cf. FIG. 1) in step 1806. In an alternative embodiment of step 1810, more resources (e.g., main memory, network connections) may be freed for use by successive task programs 122 (cf. FIG. 1). After completing step 1810, the worker client 101 (cf. also FIG. 1) may proceed by invoking process cache data and application 1900 (cf. also FIG. 13) where the backend application code and the data collection may be cached.

In step 1836, the broker system 201 (cf. also FIG. 1) may mark the task 615 (cf. FIG. 2) as completed and advance the associated job 610 (cf. FIG. 2), for example, by updating its state, which holds the progress of the job execution. In step 1838, the broker system 201 (cf. also FIG. 1) notifies any components having registered as task completion monitors that the task 615 (cf. also FIG. 2) was completed. A task completion monitor may be a component of the broker system 201 (cf. also FIG. 1) or an external component outside of broker system 201 (cf. also FIG. 1), which needs to receive the information of a task 615 (cf. also FIG. 2) being completed. For instance, a monitoring dashboard of system 201 (cf. also FIG. 1) may display the execution progress of a job 610 (cf. also FIG. 2) which may entail showing the completed tasks 615 (cf. also FIG. 2) of that job. In another example, the consumer client 501 (cf. also FIG. 1) may have registered as task completion monitor and be notified in step 1838, in order to subsequently remove any resources it may have provided for that task, such as a data chunk 646 (cf. also FIG. 2), from its internal main memory. In step 1840, the broker system 201 (cf. also FIG. 1) determines whether, after the completion of task 615 (cf. FIG. 2), the associated job 610 (cf. FIG. 2) is completed. For instance, a job 610 (cf. FIG. 2) may be complete when the entire input data collection 642 (cf. FIG. 2) was processed by the plurality of tasks 615 (cf. FIG. 2) of this job. If the job 610 (cf. FIG. 2) was completed, the broker system 201 (cf. also FIG. 1) may receive another job in process job receipt 1100 (cf. also FIG. 4). If the job 610 (cf. FIG. 2) is not complete, the broker system 201 (cf. also FIG. 1) may schedule another task in process task scheduling 1600 (cf. also FIG. 10).

If a task 615 (cf. FIG. 2), which is running in the worker client runtime environment 120 (cf. FIG. 1) of a worker client 101 (cf. also FIG. 1) is interrupted before it has completed, in step 1826, the affected task 615 (cf. FIG. 2) may evaluated to be marked as aborted in step 1832 and reset the associated job 610 (cf. FIG. 2) to allow for a re-scheduling of the task. For instance, resetting a job 610 (cf. FIG. 2) may entail updating its status, which indicates the portions of the input data collection 642 (cf. FIG. 2), which was already assigned to running tasks. In step 1828, any task error monitors may be notified of the interrupted task 615 (cf. FIG. 2). Examples of task error monitors may be statistics gathering components of the broker system 201 (cf. also FIG. 1) where the number and frequency of failed task execution is recorded, administrator dashboards where the number and frequency of failed task execution is visually displayed, or any other system or component subscribing to be notified upon failing task executions.

FIG. 13 shows an exemplary flow chart indicating a sequence of steps performed by a worker client 101 (cf. also FIG. 1) when caching a backend application 634 (cf. FIG. 2), an input data collection 642 (cf. FIG. 2), and an output data collection 644 (cf. FIG. 2) of a job 610 (cf. FIG. 2) in the main memory or persistent storage of the worker client 101 (cf. also FIG. 1). In other words, process code and data caching 1900 shows a process performed by worker client 101 (cf. also FIG.1) to cache the data chunk 646 (cf. FIG. 2), the portion of the output data collection 644 (cf. FIG. 2) which was produced by a task program 122 (cf. FIG. 1) corresponding to a task 615 (cf. FIG. 2), and the backend application 634 (cf. FIG. 2) code. In one embodiment of system 100 (cf. FIG. 1), process code and data caching 1900 may run after each task program 122 (cf. FIG. 1) has completed. In another embodiment of system 100 (cf. FIG. 1), process code and data caching 1900 may periodically run at discrete points in time, not related to the completion of a task program 122 (cf. FIG. 1).

In step 1904, the worker client runtime environment 120 (cf. FIG. 1) may evaluate whether an in-memory caching of the data chunk 646 (cf. FIG. 2) or the portion of the output data collection 644 (cf. FIG. 2), which was produced by the task program 122 (cf. FIG. 1) are to be cached and kept in main memory of the worker client 101 (cf. also FIG. 1). In an example embodiment of step 1904, evaluation may be based on the task specification 1780 (cf. FIG. 11) or the job specification 1188 (cf. FIG. 4) which may explicitly indicate whether the data chunk 615 (cf. FIG. 2) associated to a task 615 (cf. FIG. 2) or the portion of the output data collection 644 (cf. FIG. 2) produced by the task 615 (cf. FIG. 2) and which is associated to the corresponding job 610 (cf. FIG. 2) shall be cached and kept in main memory of the worker client 101 (cf. also FIG. 1). In another example, the worker client runtime environment 120 (cf. FIG. 1) may implement a cache eviction strategy (i.e., selected elements in the cache such as data chunks 646 (cf. FIG. 2) or portions of output data collections 644 (cf. FIG. 2) may be erased from the cache) such as least recently used (LRU), least frequently used (LFU), first-in-first-out (FIFO) or any other cache eviction strategy suitable to optimize the cache such that it predominantly holds data chunks 646 (cf. FIG. 2) or portions of output data collections 644 (cf. FIG. 2) which may subsequently be used by other tasks 615 (cf. FIG. 2) and in step 1816 (cf. FIG. 12) to avoid reading input data from a stream originating from an external system such as the broker system 201 (cf. FIG. 1), and instead have the required input data items 1882 (cf. FIG. 12) available in the cache. If in step 1904 it is evaluated that no in-memory data caching is required, process code and data caching 1900 continues at step 1912. If in step 1904 it is evaluated that caching of the data chunk 646 (cf. FIG. 2) or the portion of the output data collection 644 (cf. FIG. 2) is required, in step 1908 the data chunk 646 (cf. FIG. 2) or the portion of the output data collection 644 (cf. FIG. 2) are inserted into the cache which is a data structure held in main memory of the worker client 101 (cf. also FIG. 1). As a consequence of inserting a data entry into the cache which has a limited amount of main memory available, in step 1908 other data entries from the cache may be required to be evicted (e.g., by using eviction strategies such as LRU, LFU, or FIFO).

In step 1912, the worker client runtime environment 120 (cf. FIG. 1) evaluates whether a persistent caching of the data chunk 646 (cf. FIG. 2) or the portion of the output data collection 644 (cf. FIG. 2) is required, where the persistent cache may be a data structure in a persistent storage system local to the worker client 101 (cf. also FIG. 1). Examples of persistent storage systems include storage systems provided by a World Wide Web browser and made available to the worker client runtime environment 120 (cf. FIG. 1) through JAVSCSRIPT APIs (e.g., Web Storage, WebSQL, IndexedDB). Different to an in-memory cache, a persistent cache may be shared by multiple worker clients 101, 102 (cf. FIG. 1) such as for instance, successive worker clients 101, 102 (cf. FIG. 1) where a first worker client 101 (cf. also FIG. 1) is terminated before a second worker client 102 (cf. FIG. 1) is instantiated. Similar to the evaluation performed in step 1904, the evaluation performed in step 1912 may be influenced by explicit instructions in the task specification 1780 (cf. FIG. 11) or job specification 1188 (cf. FIG. 4). In another example, a cache eviction strategy may be used. In a further example, the in-memory cache and the persistent cache may cooperate where the content of both caches may be synchronized and the persistent cache may provide for larger capacity to store more data entries such that a data entry, which is evicted from the main memory cache, may still exist in the persistent cache. If in step 1912 it is evaluated that no persistent data caching is required, process code and data caching 1900 continues at step 1920. If in step 1912 it is evaluated that persistent caching of the data chunk 646 (cf. FIG. 2) or the portion of the output data collection 644 (cf. FIG. 2) is required, in step 1916 the data chunk 646 (cf. FIG. 2) or the portion of the output data collection 644 (cf. FIG. 2) are inserted into the persistent cache of the worker client 101 (cf. also FIG. 1).

In step 1920, the worker client runtime environment 120 (cf. FIG. 1) may evaluate whether a persistent caching of the code 1784 (cf. FIG. 11) of the backend application, which is run by the task program 122 (cf. FIG. 1) is persistently cached. Persistently caching the backend application code 1784 (cf. FIG. 11), which may, for example, be a plurality of JAVSCRIPT files or other resources retrieved by a worker client 101 (cf. also FIG. 1) in step 1728 (cf. FIG. 11), may augment a caching functionality provided by the software environment of the worker clients 101, 102 (cf. FIG. 1). For instance, a World Wide Web browser may implement a separate caching strategy, which may be controlled through Hypertext Transfer Protocol (HTTP) metadata of resources such as JAVASCRIPT files and other resources, which a worker client 101 (cf. also FIG. 1) may retrieve from the broker system 201 (cf. FIG. 1). The evaluation upon the persistent caching of the backend application code 1784 (cf. FIG. 11) may, for example, be performed based on the task specification 1780 (cf. FIG. 11) or the job specification 1188 (cf. FIG. 4). In another example, the evaluation on the persistent caching of the backend application code 1784 (cf. FIG. 11) may be performed based on the size of the backend application code 1784 (cf. FIG. 11) where larger code sizes may be preferably cached to avoid loading the backend application code 1784 (cf. FIG. 11) for a subsequent task 615 (cf. FIG. 2) using the same backend application 634 (cf. FIG. 2). In step 1924, the backend application code 1784 (cf. FIG. 11) may be inserted into the persistent cache of the worker client 101 (cf. also FIG. 1). Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. A worker client (101, 102) comprising:
a runtime environment (120) obtained previously from a broker system (201) having a broker reference (422);
an interface component (111) communicating with the broker system (201) using the broker reference (422) previously obtained from an intermediary system (401) as a further computing device,
the interface component (111) adapted to receive at least one computing task specification;
wherein the runtime environment (120) is configured to process task input data according to the at least one computing task specification with a task program (122) resulting in task output data; and
the interface component (111) further adapted to send the task output data to a previously determined recipient device; the worker client (101, 102) being **characterised**
**in that** the worker client (101, 102) is selected by a client selection component (430) of the intermediary system (401) among a plurality of worker clients issuing network requests to the intermediary system (401), and in that a broker embedding component (420) of the intermediary system (401) embeds the broker reference (422) only into network response to the worker clients (101, 102) that are selected by the client selection component (430).

2. The worker client (101, 102) of claim 1, wherein the computing task specification further includes a task program indicator, and wherein, in case the runtime environment (120) is lacking the task program (122) indicated in the computing task specification, the interface component (111) is further adapted to receive corresponding task program code executable in the runtime environment (120).

3. The worker client (101, 102) of claims 1 or 2, wherein the computing task specification further includes a data chunk being a subset of an input data collection, and wherein, in case the runtime environment (120) is lacking the task input data indicated in the task specification, the interface component (111) is further adapted to receive the task input data.

4. The worker client (101, 102) of any one of the claims 1 to 3, wherein:
the interface component (111) is further adapted to receive a client context request; the runtime environment (120) is further comprising a client context component (126) configured to evaluate the worker client (101, 102) based on the client context request;
and the interface component (111) is further adapted to send the evaluated client context data to the broker system (201) that is adapted to use predictive analytics algorithm to predict the time interval within which a communication coupling (190) exists between the broker system (210) and the worker clients (101, 102) and the worker clients (101, 102) receive and process the tasks.

5. The worker client (101, 102) of any one of the claims 1 to 4, wherein: the interface component (111) is further adapted to receive benchmarking code; the runtime environment (120) further comprising a benchmark component (128) configured to evaluate the worker client (101, 102) based on the benchmarking code; and the interface component (111) is further adapted to send evaluated benchmark data.

6. A broker system (201), comprising: a consumer interface (212) component adapted to receive a job execution specification; an evaluation component (230) configured to evaluate worker clients (101, 102) based on the job execution specification; a compute job component (240) configured to create at least one computing task having a computing task specification according to the evaluation of the worker clients (101, 102); and a deployment component (250) configured to deploy the at least one computing task to a respective evaluated worker client (101); the broker system (201) **characterized in that** it comprises an intermediary interface component (213) adapted to send a computing resource request (1280) to one or more intermediary systems (401), and - prior to evaluation of the worker clients (101, 102) by the broker system (201) - to receive a network request (1384) from the worker client (1312), wherein the worker client (101, 102) identifies the broker system (201) by retrieving an broker reference (422) embedded by the intermediary system (401) that selected the worker clients (101, 102).

7. The broker system (201) of claim 6, **characterised in that** the deployment component (250) is configured to deploy the at least one computing task to a respective evaluated worker client (101) through a temporary communication coupling (190), and that the evaluation component (230) predicts the time interval within which the communication coupling (190) exists and the worker clients (101, 102) receive and process the tasks, prediction being performed by predictive analytics algorithms.

8. The broker system (201) of claim 6, further comprising: a worker client interface component (211) adapted to receive at least one task output data resulting from the at least one computing task processed by the respective evaluated worker (101) client to be stored on the broker system (201);
a composer component (260) configured to compose the at least one task output data to job output data; and
in case the job output data corresponds to the job execution specification, the consumer interface component (212) further configured to send the job output data to a previously determined recipient device.

9. A computer program product that when loaded into a memory of a computing device and executed by at least one processor of the computing device lets the computing device perform as worker client (101) according to any one of the claims 1 to 5.

10. A computer program product that when loaded into a memory of a computing device and executed by at least one processor of the computing device lets the computing device perform as broker system (201) according to any one of the claims 6 to 8.

11. A system (100) for data processing, comprising:
at least one worker client (101) configured according to any one of the claim 1 to 5; and
a broker system (201) configured according to any one of the claims 6 to 8.

12. A computer implemented method for data processing by a worker client (101, 102) having a runtime environment (120) obtained previously from a broker system (201) having a broker reference (422), wherein the broker reference has been obtained by the worker client (101, 102) from a further computing device, the method comprising:
receiving from the broker system at least one computing task specification;
processing in the runtime environment (120) task input data according to the at least one computing task specification with a task program (122) resulting in task output data; and
sending the task output data to a previously determined recipient device; the method being **characterised in that** the worker client (101, 102) is selected by a client selection component (430) of an intermediary system (401) among a plurality of worker clients issuing network requests to the intermediary system (401), and **in that** a broker embedding component (420) of the intermediary system (401) embeds the broker reference (422) only into network response to the worker clients (101, 102) that are selected by the client selection component (430).

13. The method of claim 12, wherein the computing task specification further includes a task program indicator, and, in case the runtime environment (120) is lacking the task program (122) indicated in the computing task specification, the method further comprising:
requesting (1720) corresponding task program code executable in the runtime environment (120).

14. The method of claims 12 or 13, wherein the computing task specification further includes a data chunk being a subset of an input data collection, and, in case the runtime environment (120) is lacking the task input data indicated in the task specification, the method further comprises: requesting (1730) the task input data prior to the processing.

15. A computer implemented method for data brokering, comprising:
receiving (1152) a job execution specification through a consumer interface (212) component;
evaluating worker clients (101, 102) based on the job execution specification;
creating at least one computing task having a computing task specification according to the evaluation of the worker clients (101, 102); and
deploying the at least one computing task to a respective evaluated worker client (101);
the method **characterised in that** prior to evaluating, the following steps are performed:
sending a computing resource request (1280) to one or more intermediary systems (401), receiving a network request (1384) from a worker client (1312), wherein the worker client (101, 102) has identified the broker system (201) by retrieving a broker reference (422) embedded by the intermediary system (401) that has selected the worker client (101, 102).

## Patentansprüche

1. Arbeiter-Client (101, 102), der Folgendes umfasst:
eine Laufzeitumgebung (120), die zuvor von einem Vermittlersystem (201), das einen Vermittlerverweis (422) besitzt, erhalten worden ist;
eine Schnittstellenkomponente (111), die mit dem Vermittlersystem (201) unter Verwendung des Vermittlerverweises (422), der zuvor von einem Zwischensystem (401) als eine weitere Computervorrichtung erhalten worden ist, kommuniziert,
wobei die Schnittstellenkomponente (111) dazu ausgelegt ist, mindestens eine Berechnungsaufgabenspezifizierung zu empfangen;
wobei die Laufzeitumgebung (120) konfiguriert ist, Aufgaben-Eingabedaten gemäß der mindestens einen Berechnungsaufgabenspezifizierung mit einem Aufgabenprogramm (122) zu verarbeiten, was Aufgaben-Ausgabedaten zur Folge hat; und
wobei die Schnittstellenkomponente (111) ferner dazu ausgelegt ist, die Aufgaben-Ausgabedaten an eine zuvor bestimmte Empfängervorrichtung zu senden; wobei der Arbeiter-Client (101, 102) **dadurch gekennzeichnet ist,**
**dass** der Arbeiter-Client (101, 102) durch eine Client-Auswahlkomponente (430) des Zwischensystems (401) aus mehreren Arbeiter-Clients, die Netzanfragen an das Zwischensystem (401) ausgeben, ausgewählt wird und dass eine Vermittler-Einbettungskomponente (420) des Zwischensystems (401) den Vermittlerverweis (422) nur in eine Netzantwort an die Arbeiter-Clients (101, 102), die durch die Client-Auswahlkomponente (430) ausgewählt werden, einbettet.

2. Arbeiter-Client (101, 102) nach Anspruch 1, wobei die Berechnungsaufgabenspezifizierung ferner einen Aufgabenprogrammindikator enthält und wobei die Schnittstellenkomponente (111) ferner dazu ausgelegt ist, entsprechenden Programmcode, der in der Laufzeitumgebung (120) ausgeführt werden kann, zu empfangen, falls der Laufzeitumgebung (120) das Aufgabenprogramm (122), das in der Berechnungsaufgabenspezifizierung angegeben ist, fehlt.

3. Arbeiter-Client (101, 102) nach Anspruch 1 oder 2, wobei die Berechnungsaufgabenspezifizierung ferner ein Datenstück, das eine Teilmenge einer Eingabedatensammlung ist, enthält und wobei die Schnittstellenkomponente (111) ferner dazu ausgelegt ist, die Aufgaben-Eingabedaten zu empfangen, falls der Laufzeitumgebung (120) die Aufgaben-Eingabedaten, die in der Aufgabenspezifizierung angegeben sind, fehlen.

4. Arbeiter-Client (101, 102) nach einem der Ansprüche 1 bis 3, wobei:
die Schnittstellenkomponente (111) ferner dazu ausgelegt ist, eine Client-Kontextanfrage zu empfangen; die Laufzeitumgebung (120) ferner eine Client-Kontextkomponente (126) umfasst, die konfiguriert ist, den Arbeiter-Client (101, 102) anhand der Client-Kontextanfrage auszuwerten; und die Schnittstellenkomponente (111) ferner dazu ausgelegt ist, die ausgewerteten Client-Kontextdaten an das Vermittlersystem (201) zu senden, das dazu ausgelegt ist, einen Vorhersageanalysealgorithmus zu verwenden, um ein Zeitintervall vorherzusagen, innerhalb dessen eine Kommunikationskopplung (190) zwischen dem Vermittlersystem (210) und den Arbeiter-Clients (101, 102) existiert und die Arbeiter-Clients (101, 102) die Aufgaben empfangen und verarbeiten.

5. Arbeiter-Client (101, 102) nach einem der Ansprüche 1 bis 4, wobei: die Schnittstellenkomponente (111) ferner dazu ausgelegt ist, Benchmarking-Code zu empfangen; die Laufzeitumgebung (120) ferner eine Benchmark-Komponente (128) umfasst, die konfiguriert ist, den Arbeiter-Client (101, 102) anhand des Benchmarking-Codes auszuwerten; und die Schnittstellenkomponente (111) ferner dazu ausgelegt ist, ausgewertete Benchmark-Daten zu senden.

6. Vermittlersystem (201), das Folgendes umfasst:
eine Verbraucherschnittstellenkomponente (212), die dazu ausgelegt ist, eine Auftragsausführungsspezifizierung zu empfangen; eine Auswertungskomponente (230), die konfiguriert ist, Arbeiter-Clients (101, 102) anhand der Auftragsausführungsspezifizierung auszuwerten; eine Berechnungsauftragskomponente (240), die konfiguriert ist, mindestens eine Berechnungsaufgabe zu erzeugen, die eine Berechnungsaufgabenspezifizierung gemäß der Auswertung der Arbeiter-Clients (101, 102) besitzt; und
eine Bereitstellungskomponente (250), die konfiguriert ist, die mindestens eine Berechnungsaufgabe für einen jeweiligen ausgewerteten Arbeiter-Client (101) bereitzustellen; wobei das Vermittlersystem (201) **dadurch gekennzeichnet ist, dass** es eine Zwischen-Schnittstellenkomponente (213) umfasst, die dazu ausgelegt ist, eine Berechnungsbetriebsmittelanfrage (1280) an ein oder mehrere Zwischensystem (401) zu senden und vor der Auswertung der Arbeiter-Clients (101, 102) durch das Vermittlersystem (201) eine Netzanfrage (1384) von dem Arbeiter-Client (1312) zu empfangen, wobei der Arbeiter-Client (101, 102) das Vermittlersystem (201) durch Abrufen eines Vermittlerverweises (422), der durch das Zwischensystem (401), der die Arbeiter-Clients (101, 102) ausgewählt hat, eingebettet worden ist, identifiziert.

7. Vermittlersystem (201) nach Anspruch 6, **dadurch gekennzeichnet, dass** die Bereitstellungskomponente (250) konfiguriert ist, mindestens eine Berechnungsaufgabe für einen jeweiligen ausgewerteten Arbeiter-Client (101) durch eine vorübergehende Kommunikationskopplung (190) bereitzustellen und dass die Auswertungskomponente (230) das Zeitintervall vorhersagt, innerhalb dessen die Kommunikationskopplung (190) existiert und die Arbeiter-Clients (101, 102) die Aufgaben empfangen und verarbeiten, wobei die Vorhersage durch Vorhersageanalysealgorithmen durchgeführt wird.

8. Vermittlersystem (201) nach Anspruch 6, das ferner Folgendes umfasst: eine Arbeiter-Client-Schnittstellenkomponente (211), die dazu ausgelegt ist, mindestens einen Satz von Aufgaben-Ausgabedaten zu empfangen, der aus der mindestens einen Berechnungsaufgabe folgt, die durch den jeweiligen ausgewerteten Arbeiter-Client (101) verarbeitet worden ist, um auf dem Vermittlersystem (201) gespeichert zu werden;
eine Zusammenstellungskomponente (260), die konfiguriert ist, den mindestens einen Satz von Aufgaben-Ausgabedaten zu den Auftragsausgabedaten zusammenzustellen; und
wobei die Verbraucherschnittstellenkomponente (212) ferner konfiguriert ist, die Auftragsausgabedaten an eine zuvor bestimmte Empfängervorrichtung zu senden, falls die Auftragsausgabedaten der Auftragsausführungsspezifizierung entsprechen.

9. Computerprogrammprodukt, das der Computervorrichtung ermöglicht, als ein Arbeiter-Client (101) gemäß einem der Ansprüche 1 bis 5 zu arbeiten, wenn es auf einen Speicher einer Computervorrichtung geladen wird und durch mindestens einen Prozessor der Computervorrichtung ausgeführt wird.

10. Computerprogrammprodukt, das es der Computervorrichtung ermöglicht, als ein Vermittlersystem (201) gemäß einem der Ansprüche 6 bis 8 zu arbeiten, wenn es auf einen Speicher einer Computervorrichtung geladen wird und durch mindestens einen Prozessor der Computervorrichtung ausgeführt wird.

11. System (100) zur Datenverarbeitung, das Folgendes umfasst:
mindestens einen Arbeiter-Client (101), der gemäß einem der Ansprüche 1 bis 5 konfiguriert ist; und
ein Vermittlersystem (201), das gemäß einem der Ansprüche 6 bis 8 konfiguriert ist.

12. Computerimplementiertes Verfahren zur Datenverarbeitung durch einen Arbeiter-Client (101, 102), der eine Laufzeitumgebung (120) besitzt, die zuvor von einem Vermittlersystem (201) erhalten worden ist, das einen Vermittlerverweis (422) besitzt, wobei der Vermittlerverweis durch den Arbeiter-Client (101, 102) von einer weiteren Computervorrichtung erhalten worden ist, wobei das Verfahren Folgendes umfasst:
Empfangen mindestens einer Berechnungsaufgabenspezifizierung von dem Vermittlersystem;
Verarbeiten von Aufgaben-Eingabedaten in der Laufzeitumgebung (120) gemäß der mindestens einen Berechnungsaufgabenspezifizierung mit einem Aufgabenprogramm (122), was Aufgaben-Ausgabedaten zur Folge hat; und
Senden der Aufgaben-Ausgabedaten an eine zuvor bestimmte Empfängervorrichtung; wobei das Verfahren **dadurch gekennzeichnet ist, dass** der Arbeiter-Client (101, 102) durch eine Client-Auswahlkomponente (430) eines Zwischensystems (401) aus mehreren Arbeiter-Clients, die Netzanfragen an das Zwischensystem (401) ausgeben, ausgewählt wird und dass eine Vermittler-Einbettungskomponente (420) des Zwischensystems (401) den Vermittlerverweis (422) nur in eine Netzantwort an die Arbeiter-Clients (101, 102), die durch die Client-Auswahlkomponente (430) ausgewählt werden, einbettet.

13. Verfahren nach Anspruch 12, wobei die Berechnungsaufgabenspezifizierung ferner einen Aufgabenprogrammindikator enthält und falls der Laufzeitumgebung (120) das Aufgabenprogramm (122) fehlt, das in der Berechnungsaufgabenspezifizierung angegeben ist, das Verfahren ferner Folgendes umfasst:
Anfragen (1720) eines entsprechenden Aufgaben-Programmcodes, der in der Laufzeitumgebung (120) ausgeführt werden kann.

14. Verfahren nach Anspruch 12 oder 13, wobei die Berechnungsaufgabenspezifizierung ferner ein Datenstück, das eine Teilmenge einer Eingabedatensammlung ist, enthält und falls der Laufzeitumgebung (120) die Aufgaben-Eingabedaten fehlen, die in der Aufgabenspezifizierung angegeben sind, das Verfahren ferner Folgendes umfasst: Anfragen (1730) der Aufgaben-Eingabedaten vor der Verarbeitung.

15. Computerimplementiertes Verfahren zur Datenvermittlung, das Folgendes umfasst:
Empfangen (1152) einer Auftragsausführungsspezifizierung durch eine Verbraucherschnittstellenkomponente (212);
Auswerten von Arbeiter-Clients (101, 102) anhand der Auftragsausführungsspezifizierung;
Erzeugen mindestens einer Berechnungsaufgabe, die eine Berechnungsaufgabenspezifizierung gemäß der Auswertung der Arbeiter-Clients (101, 102) besitzt; und
Bereitstellen der mindestens einen Berechnungsaufgabe für einen jeweiligen ausgewerteten Arbeiter-Client (101);
wobei das Verfahren **dadurch gekennzeichnet ist, dass** vor der Auswertung die folgenden Schritte durchgeführt werden:
Senden einer Berechnungsbetriebsmittelanfrage (1280) an ein oder mehrere Zwischensysteme (401),
Empfangen einer Netzanfrage (1384) von einem Arbeiter-Client (1312), wobei der Arbeiter-Client (101, 102) das Vermittlersystem (201) durch Abrufen eines Vermittlerverweises (422), der durch das Zwischensystem (401), das den Arbeiter-Client (101, 102) ausgewählt hat, eingebettet worden ist, identifiziert hat.

## Revendications

1. Client exécutant (101, 102) comportant :
un environnement (120) d'exécution obtenu précédemment auprès d'un système courtier (201) doté d'une référence (422) de courtier ;
un composant (111) d'interface communiquant avec le système courtier (201) en utilisant la référence (422) de courtier obtenu précédemment auprès d'un système intermédiaire (401) en tant que dispositif de calcul supplémentaire, le composant (111) d'interface étant prévu pour recevoir au moins une spécification de tâche de calcul ;
l'environnement (120) d'exécution étant configuré pour traiter des données d'entrée de tâche selon la ou les spécifications de tâches de calcul à l'aide d'un programme (122) de tâche, ce qui se traduit par des données de sortie de tâche ; et
le composant (111) d'interface étant en outre prévu pour envoyer les données de sortie de tâche à un dispositif destinataire déterminé précédemment ;
le client exécutant (101, 102) étant **caractérisé en ce que**
le client exécutant (101, 102) est sélectionné par un composant (430) de sélection de clients du système intermédiaire (401) parmi une pluralité de clients exécutants émettant des demandes de réseau adressées au système intermédiaire (401), et **en ce qu'**un composant (420) d'incorporation de courtier du système intermédiaire (401) n'incorpore la référence (422) de courtier que dans une réponse de réseau adressée aux clients exécutants (101, 102) qui sont sélectionnés par le composant (430) de sélection de clients.

2. Client exécutant (101, 102) selon la revendication 1, la spécification de tâche de calcul comprenant en outre un indicateur de programme de tâche et, dans le cas où l'environnement (120) d'exécution est dépourvu du programme (122) de tâche indiqué dans la spécification de tâche de calcul, le composant (111) d'interface étant en outre prévu pour recevoir un code exécutable correspondant de programme de tâche dans l'environnement (120) d'exécution.

3. Client exécutant (101, 102) selon les revendications 1 ou 2, la spécification de tâche de calcul comprenant en outre un fragment de données qui est un sous-ensemble d'une collection de données d'entrée et, dans le cas où l'environnement (120) d'exécution est dépourvu des données d'entrée de tâche indiqué dans la spécification de tâche, le composant (111) d'interface étant en outre prévu pour recevoir les données d'entrée de tâche.

4. Client exécutant (101, 102) selon l'une quelconque des revendications 1 à 3 :
le composant (111) d'interface étant en outre prévu pour recevoir une demande de contexte de client ;
l'environnement (120) d'exécution comportant en outre un composant (126) de contexte de client configuré pour évaluer le client exécutant (101, 102) d'après la demande de contexte de client ; et
le composant (111) d'interface étant en outre prévu pour envoyer les données de contexte de client évaluées au système courtier (201) qui est prévu pour utiliser un algorithme d'analyse prédictive pour prédire l'intervalle de temps dans la limite duquel un couplage (190) de communication existe entre le système courtier (210) et les clients exécutants (101, 102) et les clients exécutants (101, 102) reçoivent et traitent les tâches.

5. Client exécutant (101, 102) selon l'une quelconque des revendications 1 à 4 : le composant (111) d'interface étant en outre prévu pour recevoir un code de référenciation ; l'environnement (120) d'exécution comportant en outre un composant (128) de référenciation configuré pour évaluer le client exécutant (101, 102) d'après le code de référenciation ; et le composant (111) d'interface étant en outre prévu pour envoyer des données de référenciation évaluées.

6. Système courtier (201), comportant : un composant (212) d'interface de consommateurs prévu pour recevoir une spécification d'exécution de travail ; un composant (230) d'évaluation configuré pour évaluer des clients exécutants (101, 102) d'après la spécification d'exécution de travail ; un composant (240) de travaux de calcul configuré pour créer au moins une tâche de calcul dotée d'une spécification de tâche de calcul selon l'évaluation des clients exécutants (101, 102) ; et un composant (250) de déploiement configuré pour déployer la ou les tâches de calcul vers un client exécutant (101) évalué respectif ; le système courtier (201) étant **caractérisé en ce qu'**il comporte un composant (213) d'interface intermédiaire prévu pour envoyer une demande (1280) de ressources de calcul à un ou plusieurs systèmes intermédiaires (401), et préalablement à l'évaluation des clients exécutants (101, 102) par le système courtier (201) pour recevoir une demande (1384) de réseau provenant du client exécutant (1312), le client exécutant (101, 102) identifiant le système courtier (201) en extrayant une référence (422) de courtier incorporée par le système intermédiaire (401) qui a sélectionné les clients exécutants (101, 102).

7. Système courtier (201) selon la revendication 6, **caractérisé en ce que** le composant (250) de déploiement est configuré pour déployer la ou les tâches de calcul to un client exécutant (101) évalué respectif via un couplage temporaire (190) de communication, et **en ce que** le composant (230) d'évaluation prédit l'intervalle de temps dans la limite duquel le couplage (190) de communication existe et les clients exécutants (101, 102) reçoivent et traitent les tâches, la prédiction étant effectuée par des algorithmes d'analyse prédictive.

8. Système courtier (201) selon la revendication 6, comportant en outre :
un composant (211) d'interface de clients exécutants prévu pour recevoir au moins une donnée de sortie de tâche résultant de la ou des tâches de calcul traitées par le client exécutant (101) évalué respectif, à stocker sur le système courtier (201) ;
un composant (260) de composeur configuré pour composer la ou les données de sortie de tâche en données de sortie de travail ; et
dans le cas où les données de sortie de travail correspondent à la spécification d'exécution de travail, le composant (212) d'interface de consommateurs étant en outre configuré pour envoyer les données de sortie de travail à un dispositif destinataire déterminé précédemment.

9. Produit de programme d'ordinateur qui, lorsqu'il est chargé dans la mémoire d'un dispositif de calcul et exécuté par au moins un processeur du dispositif de calcul, fait en sorte que le dispositif de calcul fonctionne comme client exécutant (101) selon l'une quelconque des revendications 1 à 5.

10. Produit de programme d'ordinateur qui, lorsqu'il est chargé dans la mémoire d'un dispositif de calcul et exécuté par au moins un processeur du dispositif de calcul, fait en sorte que le dispositif de calcul fonctionne comme système courtier (201) selon l'une quelconque des revendications 6 à 8.

11. Système (100) de traitement de données, comportant :
au moins un client exécutant (101) configuré selon l'une quelconque des revendications 1 à 5 ; et un système courtier (201) configuré selon l'une quelconque des revendications 6 à 8.

12. Procédé informatisé pour le traitement de données par un client exécutant (101, 102) doté d'un environnement (120) d'exécution obtenu précédemment auprès d'un système courtier (201) doté d'une référence (422) de courtier, la référence de courtier ayant été obtenue par le client exécutant (101, 102) auprès d'un dispositif de calcul supplémentaire, le procédé comportant les étapes consistant à : recevoir en provenance du système courtier au moins une spécification de tâche de calcul ;
traiter dans l'environnement (120) d'exécution des données d'entrée de tâche selon la ou les spécifications de tâches de calcul à l'aide d'un programme (122) de tâche, ce qui se traduit par des données de sortie de tâche ; et
envoyer les données de sortie de tâche à un dispositif destinataire déterminé précédemment ;
le procédé étant **caractérisé en ce que**
le client exécutant (101, 102) est sélectionné par un composant (430) de sélection de clients d'un système intermédiaire (401) parmi une pluralité de clients exécutants émettant des demandes de réseau adressées au système intermédiaire (401), et **en ce qu'**un composant (420) d'incorporation de courtier du système intermédiaire (401) n'incorpore la référence (422) de courtier que dans une réponse de réseau adressée aux clients exécutants (101, 102) qui sont sélectionnés par le composant (430) de sélection de clients.

13. Procédé selon la revendication 12, la spécification de tâche de calcul comprenant en outre un indicateur de programme de tâche et, dans le cas où l'environnement (120) d'exécution est dépourvu du programme (122) de tâche indiqué dans la spécification de tâche de calcul, le procédé le comportant en outre l'étape consistant à :
demander (1720) un code exécutable correspondant de programme de tâche dans l'environnement (120) d'exécution.

14. Procédé selon les revendications 12 ou 13, la spécification de tâche de calcul comprenant en outre un fragment de données qui est un sous-ensemble d'une collection de données d'entrée et, dans le cas où l'environnement (120) d'exécution est dépourvu des données d'entrée de tâche indiqué dans la spécification de tâche, le procédé le comportant en outre l'étape consistant à : demander (1730) les données d'entrée de tâche préalablement au traitement.

15. Procédé informatisé de courtage de données, comportant les étapes consistant à :
recevoir (1152) une spécification d'exécution de travail via un composant (212) d'interface de consommateurs ;
évaluer des clients exécutants (101, 102) d'après la spécification d'exécution de travail ; créer au moins une tâche de calcul dotée d'une spécification de tâche de calcul selon l'évaluation des clients exécutants (101, 102) ; et
déployer la ou les tâches de calcul vers un client exécutant (101) évalué respectif ;
le procédé étant **caractérisé en ce que**, préalablement à l'évaluation, les étapes suivantes sont effectuée :
envoyer une demande (1280) de ressources de calcul à un ou plusieurs systèmes intermédiaires (401), recevoir une demande (1384) de réseau provenant d'un client exécutant (1312), le client exécutant (101, 102) ayant identifié le système courtier (201) en extrayant une référence (422) de courtier incorporée par le système intermédiaire (401) qui a sélectionné le client exécutant (101, 102).
